# EUROPEAN PATENT SPECIFICATION

(11) **EP 2 396 743 B1**
(45) Date of publication and mention of the grant of the patent: **20.12.2017**
(21) Application number: 09839977.7
(22) Date of filing: 21.12.2009
(51) Int. Cl.: G06F 21/10

(54) **LICENSE MANAGEMENT APPARATUS, DEVICE, AND LICENSE MANAGEMENT METHOD**
LIZENZVERWALTUNGSVORRICHTUNG, EINRICHTUNG UND LIZENZVERWALTUNGSVERFAHREN
APPAREIL DE GESTION DE LICENCE, DISPOSITIF, ET PROCÉDÉ DE GESTION DE LICENCE

(30) Priority: 12.02.2009 JP 2009030066; 16.10.2009 JP 2009238977
(43) Date of publication of application: 21.12.2011
(73) Proprietor: Ricoh Company, Ltd., Tokyo 143-8555 (JP)
(72) Inventor: SAKO, Ryosuke, Fujisawa-shi, Kanagawa, 252-0813 (JP); ITO, Tatsuo, Sagamihara-shi, Kanagawa, 229-0006 (JP)
(74) Representative: White, Duncan Rohan
(86) International application number: PCT/JP2009/007065
(87) International publication number: WO 2010/092655

(56) References cited:
- JP-A- 2004 171 107
- JP-A- 2007 140 688
- US-A1- 2002 188 608
- US-A1- 2002 194 010
- US-A1- 2006 041 421
- US-A1- 2007 083 926

## Description

### Technical Field

The present invention relates to license management apparatuses, devices, and license management methods, and more particularly a license management apparatus, a device, and a license management method for managing a license of a program used in a device.

### Background Art

In recent years, there have been image forming apparatuses primarily referred to as multifunction peripherals that allow for new program development after shipment and have the developed programs installed. If programs are installed and licenses for using the programs are provided in accordance with usage formats of users, the users can be provided with convenience and vendors of the programs can have increased business opportunities.

For example, patent document 1 discloses a license management method with which usage of a program can be limited to particular image forming apparatuses. According to the technology disclosed in patent document 1, the amount of fee charged for the program can be changed according the number of apparatuses allowed to use the program. Furthermore, illegal usage performed by creating illegal copies of programs can be appropriately prevented.

However, programs and licenses are distributed separately, and therefore complex procedures are required to install programs in image forming apparatuses. The user cannot use a program simply by acquiring the program entity and installing the acquired program. The user also needs to acquire the license for using the program.

Furthermore, there are cases where programs are mutually dependent on each other (have a dependence relationship). However, a program may not always be sold together with the program on which it depends in a single package. Thus, even if a user installs a program and acquires the license for the installed program, the installed program may not be properly operated because a program on which the installed program depends is missing. The dependence relationships among the programs may extend across multiple hierarchies. Accordingly, the user may need to perform further procedures to overcome the problems accompanying such dependence relationships, which increases the workload on the user.

Patent Document 1: Japanese Laid-Open Patent Application No. 2008-016013 US2002/0194010 discloses a system for managing software licenses.

### Disclosure of Invention

Aspects of the present invention provide a license management apparatus, a device, and a license management method that solve or reduce one or more problems caused by the limitations and disadvantages of the related art. The invention is as defined in the appended claims.

An aspect of the present invention provides a license management apparatus including a license identifier issuing unit configured to generate and issue a license identifier and license information, the license identifier being associated with a product identifier of at least one purchased program among programs, and the license identifier being related with the license information for the at least one purchased program; a storing unit configured to store the license identifier in a license information storing unit; a determining unit configured to receive one of the license identifiers via a network, and to determine whether the one of the license identifiers is stored in the license information storing unit; and a sending unit configured to send via a network instruction information to acquire the at least one purchased program corresponding to the product identifier associated with the one of the license identifiers, or an entity of the at least one purchased program corresponding to the product identifier associated with the one of the license identifiers, and to also send via a network a license file configured to allow usage of the at least one purchased program corresponding to the product identifier associated with the one of the license identifiers, in the case that the one of the license identifiers is stored in the license information storing unit.

An aspect of the present invention provides a device including an input unit configured to receive input of a license identifier and license information, the license identifier being associated with a product identifier of at least one purchased program among programs, and the license identifier being related with the license information for the at least one purchased program; a first sending unit configured to send one of the license identifiers to a license management apparatus; a first receiving unit configured to receive, from the license management apparatus, instruction information to acquire the at least one purchased program corresponding to the product identifier associated with the one of the license identifiers, or an entity of the at least one purchased program corresponding to the product identifier associated with the one of the license identifiers; a second sending unit configured to send, to the license management apparatus, the one of the license identifiers and a device identifier unique to the device; and a second receiving unit configured to receive, from the license management apparatus, a license file configured to allow usage of the at least one purchased program corresponding to the product identifier associated with the one of the license identifiers.

An aspect of the present invention provides a license management method executed by a computer, the license management method including a license identifier issuing step of generating and issuing a license identifier and license information, the license identifier being associated with a product identifier of at least one purchased program among programs, and the license identifier being related with the license information for the at least one purchased program; a storing step of storing the license identifier in a license information storing unit; a determining step of receiving one of the license identifiers via a network, and determining whether the one of the license identifiers is stored in the license information storing unit; and a sending step of sending via a network instruction information to acquire the at least one purchased program corresponding to the product identifier associated with the one of the license identifiers, or an entity of the at least one purchased program corresponding to the product identifier associated with the one of the license identifiers, and of also sending via a network a license file configured to allow usage of the at least one purchased program corresponding to the product identifier associated with the one of the license identifiers, in the case that the one of the license identifiers is stored in the license information storing unit.

With this configuration, the procedure of installing a program and a license for the program can be appropriately supported.

### Brief Description of Drawings

[fig.1]FIG. 1 illustrates a configuration of a device management system according to a first embodiment of the present invention;
[fig.2]FIG. 2 illustrates a configuration of a sales package;
[fig.3]FIG. 3 illustrates a configuration of sales package information;
[fig.4]FIG. 4 illustrates a configuration of function package information;
[fig.5A]FIG. 5A illustrates a functional block diagram of the device management system according to the first embodiment;
[fig.5B]FIG. 5B illustrates a functional block diagram of the device management system according to the first embodiment;
[fig.5C]FIG. 5C illustrates a functional block diagram of the device management system according to the first embodiment;
[fig.6]FIG. 6 illustrates a hardware configuration of a license management server according to an embodiment of the present invention;
[fig.7]FIG. 7 illustrates a hardware configuration of an image forming apparatus according to an embodiment of the present invention;
[fig.8]FIG. 8 is a sequence diagram for describing a process performed by a sales server for acquiring list information of sales packages;
[fig.9]FIG. 9 illustrates a configuration of a sales site master;
[fig.10] FIG. 10 illustrates a configuration of a sales package master;
[fig.11]FIG. 11 illustrates a configuration of a group ID master;
[fig.12]FIG. 12 is a flowchart of a process of registering article information in an article master;
[fig.13]FIG. 13 illustrates a configuration of the article master in the sales server;
[fig. 14]FIG. 14 is a sequence diagram for describing a process performed when selling an article;
[fig. 15]FIG. 15 is a flowchart of a process of generating a product key performed by a product key issuing unit;
[fig. 16]FIG. 16 illustrates a configuration of a license management table;
[fig.17]FIG. 17 illustrates a configuration of the product key;
[fig.18]FIG. 18 is a sequence diagram for describing a process of installing the sales package;
[fig. 19] FIG. 19 illustrates an example of a displayed function extension setting menu screen page;
[fig.20]FIG. 20 illustrates an example of a displayed product key input screen page;
[fig.21]FIG. 21 illustrates an example of a displayed error screen page when the product key is invalid;
[fig.22]FIG. 22 illustrates an example of a component management table;
[fig.23]FIG. 23 illustrates an example of a displayed install list screen page;
[fig.24]FIG. 24 illustrates a configuration of an install information management table;
[fig.25]FIG. 25 illustrates an example of a displayed confirmation screen page when there is no problem with the dependency relationship;
[fig.26]FIG. 26 illustrates an example of a displayed confirmation screen page when a dependency package can be installed together with the package that is the install target;
[fig.27]FIG. 27 illustrates an example of a displayed confirmation screen page when the dependency package cannot be installed together with the package that is the install target;
[fig.28]FIG. 28 illustrates a configuration of a license file;
[fig.29]FIG. 29 is a flowchart of a process of verifying the dependency relationship and a process of generating confirmation screen page data performed by a component server unit;
[fig.30]FIG. 30 illustrates a configuration of a dependency relationship management table;
[fig.31]FIG. 31 is a flowchart of a process of generating the license file performed by an activation server unit;
[fig.32]FIG. 32 is a flowchart of a process of installing a sales package performed by the image forming apparatus;
[fig.33]FIG. 33 is a sequence diagram for describing a license renewal process;
[fig.34]FIG. 34 illustrates an example of a displayed extended function management screen page;
[fig.35]FIG. 35 illustrates an example of a displayed license acquisition/renewal screen page;
[fig.36]FIG. 36 is a sequence diagram for describing a sales package renewal process;
[fig.37]FIG. 37 illustrates an example of a displayed renewal list screen page;
[fig.38]FIG. 38 is a sequence diagram for describing a deactivation process;
[fig.39]FIG. 39 is a flowchart of a process of automatically executing deactivation in the image forming apparatus;
[fig.40]FIG. 40 illustrates a configuration of a device management system according to a second embodiment of the present invention;
[fig.41]FIG. 41 is a functional block diagram of the device management device according to the second embodiment;
[fig.42]FIG. 42 is a sequence diagram for describing a process of installing and activating a sales package according to the second embodiment;
[fig.43]FIG. 43 is a sequence diagram for describing the process of uninstalling and deactivating a sales package according to the second embodiment;
[fig.44]FIG. 44 illustrates a configuration of a device management system according to a third embodiment of the present invention; and
[fig.45A]FIG. 45A illustrates a functional block diagram of the device management system according to the third embodiment.
[fig.45B]FIG. 45B illustrates a functional block diagram of the device management system according to the third embodiment.
[fig.45C]FIG. 45C illustrates a functional block diagram of the device management system according to the third embodiment.

### Best Mode for Carrying out the Invention

Embodiments of the present invention are described below with reference to the accompanying drawings.

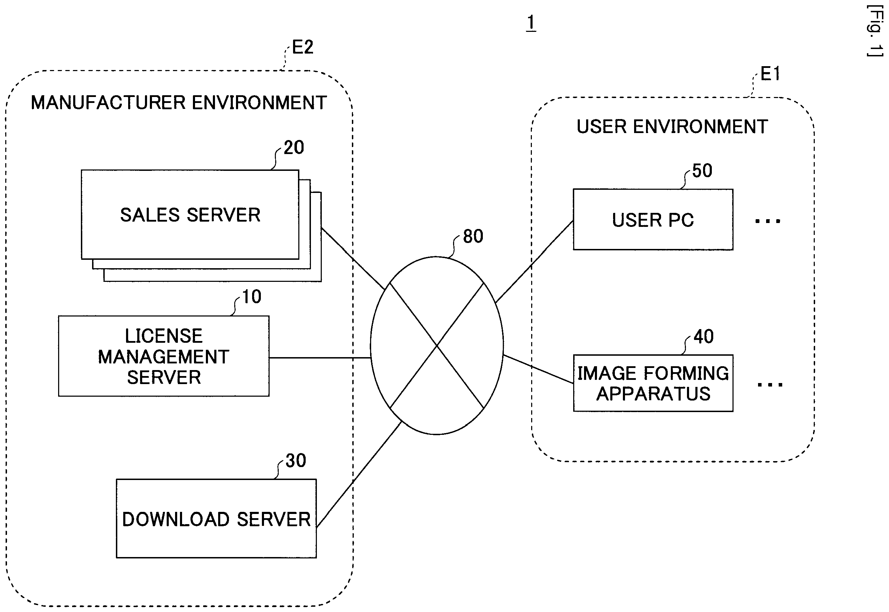

FIG. 1 illustrates a configuration of a device management system according to a first embodiment of the present invention. A device management system 1 shown in FIG. 1 includes two main system environments, i.e., a user environment E1 and a manufacturer environment E2. The user environment E1 and the manufacturer environment E2 are connected via a wide area network 80 such as the Internet.

The user environment E1 is a system environment of a user (customer) of an image forming apparatus 40 in which a program is installed. For example, the user environment E1 may be a company or an office that uses the image forming apparatus 40. The user environment E1 includes at least one image forming apparatus 40 and at least one user PC 50. The image forming apparatus 40 is a multifunction peripheral for implementing plural functions such as printing, scanning, copying, and fax transmission in a single casing. The image forming apparatus 40 may be an apparatus that can implement only one of these functions. Functions of the image forming apparatus 40 may be extended any time by adding or renewing software components (hereinafter, simply referred to as "components"). The user PC 50 is a computer used for purchasing components to be added to the image forming apparatus 40. There may be plural user environments E1 according to the number of users (number of users in units of companies or offices).

Meanwhile, the manufacturer environment E2 is a system environment of the vendor of the component added to the image forming apparatus 40. For example, the manufacturer environment E2 is operated by the manufacturer of the image forming apparatus 40. The manufacturer environment E2 includes a license management server 10, a sales server 20, and a download server 30. The sales server 20 is a computer for receiving component purchase applications from the user environment E1. The sales server 20 is provided in each of the vending regions of the image forming apparatus 40 (for example, the United States, Europe, Japan, and Asia excluding Japan), and receives purchase applications from user environments E1 belonging to a vending region of the corresponding sales server 20.

The download server 30 is a computer for managing component entities. The user environment E1 downloads, from the download server 30, component entities for which purchase applications have been made. The license management server 10 is a computer for managing a license (usage authority) of a purchased component.

The component of the present embodiment is available in units of sales packages. There may be cases where the components are available in units of sets, where each set includes plural sales packages. A set of plural sales packages is referred to as a "group" in the present embodiment.

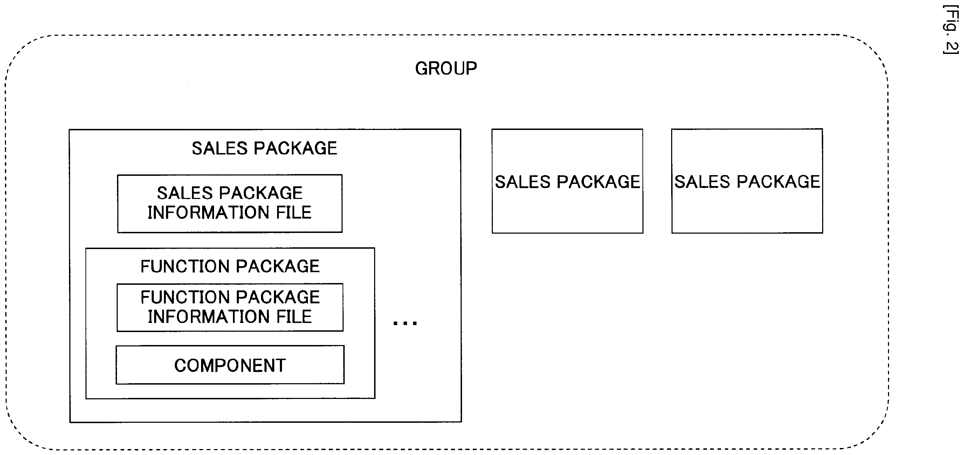

FIG. 2 illustrates a configuration of a sales package. As shown in FIG. 2, each sales package includes a sales package information file and a stack file including one or more function packages.

The sales package information file stores attribute information of the sales packages (sales package information).

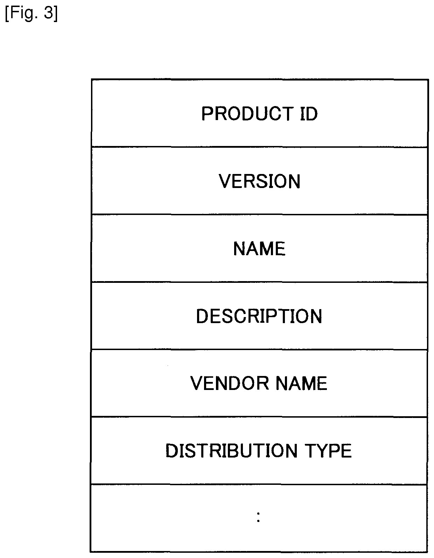

FIG. 3 illustrates a configuration of sales package information. As shown in FIG. 3, the sales package information includes a product ID, a version, a name, a description, a vendor name, and a distribution type.

The product ID is an identifier (product identifier) uniquely assigned to each sales package and each function package. The version is the version number of the sales package. The description is a description of the sales package. The vendor name is the name of the vendor (developer) of the sales package. The name is a name of the sales package. The distribution type is information indicating whether activation (authentication of license) is necessary for the sales package. A sales package that does not require activation can be used free of charge.

Referring back to FIG. 2, the function packages are software packages that are packaged in units of functions. Each function package is a stack file including a function package information file and a component entity (for example, a JAR (Java (registered trademark) Archive) file).

The function package information file stores attribute information of the function package (function package information).

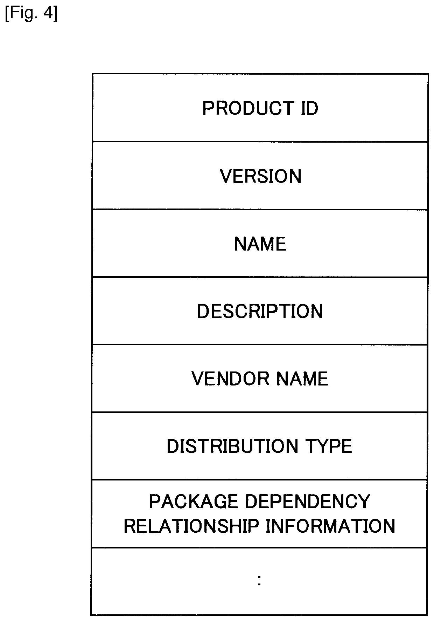

FIG. 4 illustrates a configuration of function package information. As shown in FIG. 4, the function package information includes a product ID, a version, a name, a description, a vendor name, a distribution type, and package dependency relationship information.

The product ID is a product ID for the function package. The version is the version number of the function package. The name is a name of the function package. The description is a description of the function package. The vendor name is the name of the vendor (developer) of the function package. The distribution type is information indicating whether activation is necessary for the function package. A function package that does not require activation can be used free of charge. The package dependency relationship information is a product ID of another function package on which the function package depends (or another function package that the function package uses). One function package may depend on plural function packages.

In FIG. 2, the group includes three sales packages. A sales package belonging to a group may also be available in the market alone.

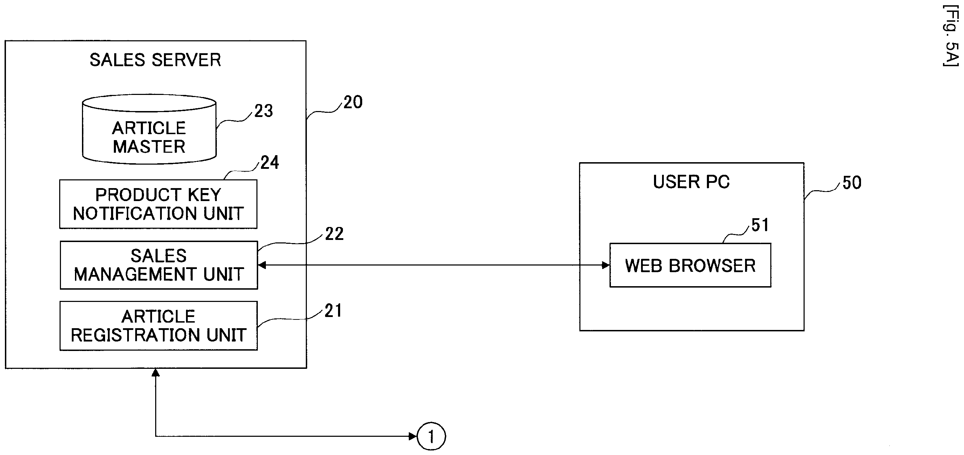

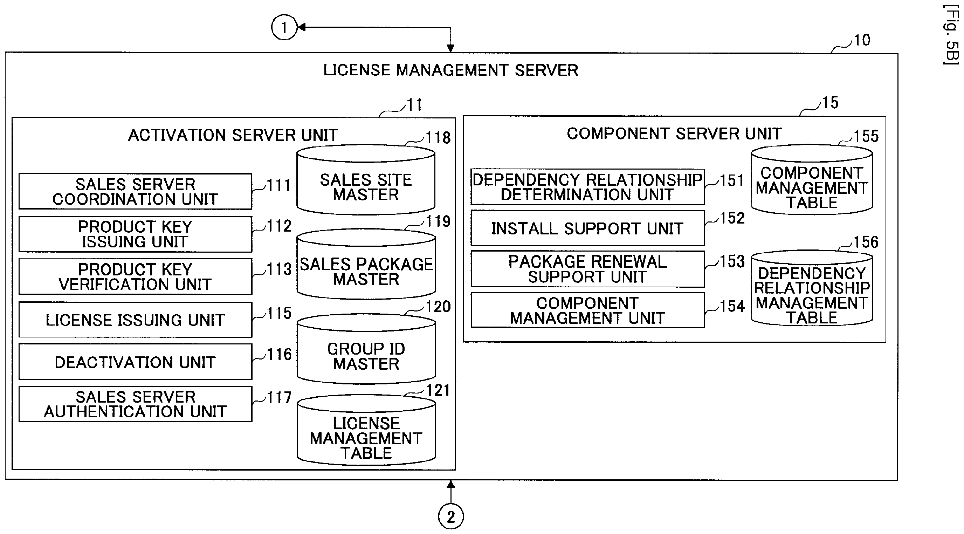

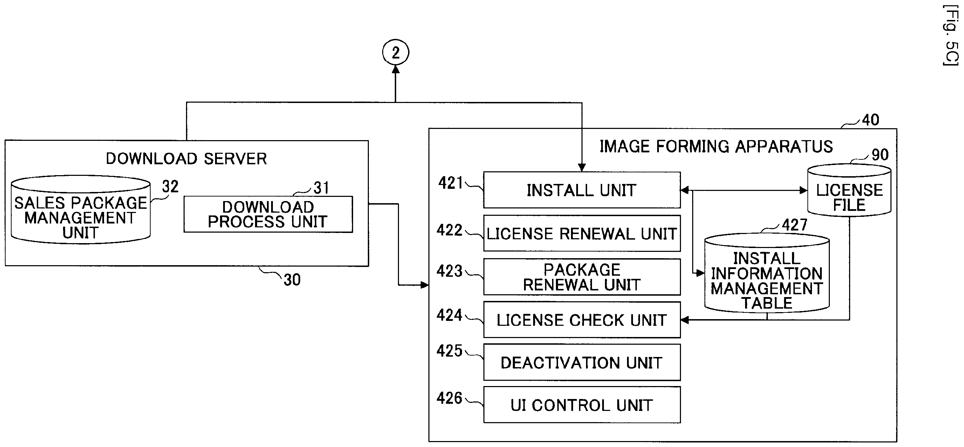

FIGS. 5A through 5C illustrate a functional block diagram of the device management system according to the first embodiment. As shown in FIGS. 5A through 5C, the sales server 20 includes an article registration unit 21, a sales management unit 22, a product key notification unit 24, and an article master 23.

The article registration unit 21 downloads information including a list of sales packages that are centrally managed in the license management server 10 (list information), and registers, in the article master 23, article configuration information that has been input by an operator based on the list information. The sales management unit 22 receives a purchase application from the user PC 50 for an article whose article information is registered in the article master 23. The sales management unit 22 causes the license management server 10 to issue a product key (license identifier) for a purchase application. The product key notification unit 24 sends the issued product key to the user PC 50, as a response to a purchase application.

In the present embodiment, the concept of an article includes a sales package or a group as well as contents of the license for the sales package or group. Therefore, identical sales packages may correspond to different articles if the contents of the licenses are different (license format, validity period of license, a volume number of the license, etc.). Hereinafter, information relevant to contents of a license is referred to as license information.

A product key is an identifier that is uniquely issued (or assigned) every time an article is purchased. The product key is used as information (license identifier) for identifying a license (usage authority) for a sales package included in an article, or as information for proving that a user is a legitimate purchaser of an article. In the present embodiment, a product ID and a product key are distinctly different. A product ID is for distinguishing a sales package (in terms of the type of manufactured product), while a product key is for distinguishing the act of purchasing an article. Therefore, a different product key is issued every time an article is purchased, even if the articles are sales packages having the same product ID. Therefore, a different product key is issued every time an article is purchased, regardless of whether the purchased sales packages have the same product ID.

The image forming apparatus 40 includes an install unit 421, a license renewal unit 422, a package renewal unit 423, a license check unit 424, a deactivation unit 425, a UI control unit 426, and an install information management table 427.

The install unit 421 controls a series of processes for installing a sales package corresponding to a product key when the product key is input. For example, the install unit 421 requests the license management server 10 to determine the validity of the dependency relationship of the function package included in the sales package that is an install target, downloads the sales package that is the install target from the download server 30, and acquires a license file 90 for the sales package that is the install target from the license management server 10.

The license file 90 stores data for proving a license for a sales package (data for allowing usage of the sales package). A sales package (component) of the present embodiment cannot be used in the image forming apparatus 40 simply by acquiring the sales package entity. The sales package can be used only by installing the license file 90 in the image forming apparatus 40.

The license renewal unit 422 controls the process of renewing (extending) the expiration date of the license for the sales package installed in the image forming apparatus 40 (license renewal process). The package renewal unit 423 controls the process of upgrading a sales package installed in the image forming apparatus 40 (sales package renewal process). The license check unit 424 determines whether usage of a sales package is allowed, based on the license file 90. The deactivation unit 425 deactivates the sales package installed in the image forming apparatus 40. Specifically, the deactivation unit 425 deletes the sales package determined as a deactivation target and the license file 90 for the corresponding sales package. The UI control unit 426 controls the contents displayed on an operations panel of the image forming apparatus 40. The install information management table 427 is a table for managing information regarding the sales package installed in the image forming apparatus 40, and is stored in a storage device of the image forming apparatus 40.

The license management server 10 includes an activation server unit 11 and a component server unit 15. The activation server unit 11 includes a sales server coordination unit 111, a product key issuing unit 112, a product key verification unit 113, a license issuing unit 115, a deactivation unit 116, a sales server authentication unit 117, a sales site master 118, a sales package master 119, a group ID master 120, and a license management table 121.

The sales server coordination unit 111 executes a process requested by the sales server 20 and a process according to information issued by the sales server 20. The product key issuing unit 112 generates a product key according to a request from the sales management unit 22 of the sales server 20. The product key issuing unit 112 registers, in the license management table 121, the generated product key and information pertaining to a license identified by the product key. The product key verification unit 113 verifies the validity of the product key that has been input to the image forming apparatus 40 when the sales package is downloaded, by referring to the license management table 121.

The license issuing unit 115 issues a license for the sales package. As the license is issued, the license management table 121 is renewed, and the license file 90 is generated. In response to a deactivation request from the deactivation unit 425 of the image forming apparatus 40, the deactivation unit 116 releases the license for which the request has been made (i.e., makes the license available). The sales server authentication unit 117 authenticates the sales server 20 with the use of the sales site master 118. In the sales package master 119, list information of the sales packages is registered. In the group ID master 120, association information associating the groups and the sales packages is registered. The sales site master 118, the sales package master 119, the group ID master 120, and the license management table 121 are saved in a storage device of the license management server 10.

The component server unit 15 includes a dependency relationship determination unit 151, an install support unit 152, a package renewal support unit 153, a component management unit 154, a component management table 155, and a dependency relationship management table 156. The dependency relationship determination unit 151 determines whether a function package included in a sales package that is the install target or the renewal target is dependent on another function package, and whether the other function package is already installed in the image forming apparatus 40. More specifically, in response to a request from the install unit 421 of the image forming apparatus 40, the dependency relationship determination unit 151 determines whether the dependency relationship regarding the function package included in the sales package that is the install target is satisfied by another function package already installed in the image forming apparatus 40, with reference to the component management table 155 and the dependency relationship management table 156. The install support unit 152 performs a process for supporting the operation of installing a sales package in the image forming apparatus 40. For example, the install support unit 152 generates HTML data (install list screen page data) for displaying a screen page for prompting the user to select a sales package to be the install target, and provides the install list screen page data to the install unit 421 of the image forming apparatus 40. The package renewal support unit 153 performs a process for supporting the renewal (upgrade) of a sales package in the image forming apparatus 40. For example, the package renewal support unit 153 generates HTML data (renewal list screen page data) for displaying a screen page for prompting the user to select a sales package to be the renewal target, and provides the renewal list screen page data to the package renewal unit 423 of the image forming apparatus 40. The component management unit 154 periodically acquires the sales packages saved in a sales package management unit 32 in the download server 30, and registers, in the component management table 155 or the dependency relationship management table 156, configuration information of the sales packages and dependency information of the function packages included in the sales packages. The component management table 155 and the dependency relationship management table 156 are saved in the storage device of the license management server 10.

Each of the function packages holds information indicating the function package on which it depends. The license management server 10 registers, in the dependency relationship management table 156, information indicating the dependency relationships among the function packages, based on the information indicating the function package on which each of the function packages depends. Therefore, information pertaining to complex dependency relationships can be easily registered. For example, when a particular function package manufactured by a manufacturer of function packages (or a sales package including function packages) has been placed in the download server 30, the license management server 10 acquires the package dependency information included in the function package from the download server 30, and automatically registers the dependency relationship between function packages in the dependency relationship management table 156. Therefore, for example, even if the administrator of the sales site and the manufacturer of the function package are different, the administrator of the sales site does not need to know the dependency relationship between the function packages. Therefore, this configuration promotes the manufacturing of the function packages by, for example, third vendors, which consequently increases sales opportunities.

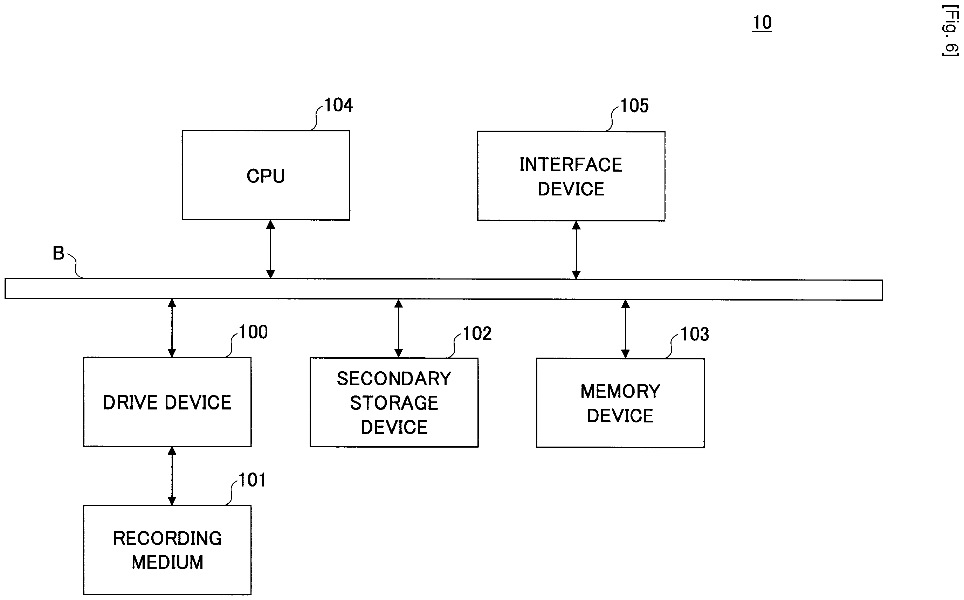

FIG. 6 illustrates a hardware configuration of the license management server 10 according to an embodiment of the present invention. The license management server 10 illustrated in FIG. 6 includes a drive device 100, a secondary storage device 102, a memory device 103, a CPU 104, and an interface device 105, which are interconnected via a bus B.

A program that implements a process of the license management server 10 is provided in a recording medium 101 such as a CD-ROM. When the recording medium 101 storing the program is set in the drive device 100, the program is installed from the recording medium 101 into the secondary storage device 102 via the drive device 100. However, the program need not be installed from the recording medium 101; the program may be downloaded from another computer via a network. The secondary storage device 102 stores the installed program, together with necessary files and data.

The memory device 103 reads the program from the secondary storage device 102 and stores the program, when an instruction to activate the program has been made. The CPU 104 implements the functions (units shown in FIGS. 5A through 5C) pertaining to the license management server 10 in accordance with the program stored in the memory device 103. The interface device 105 is used as an interface for connecting the license management server 10 to a network.

The license management server 10 may also be provided with a display device such as a liquid crystal display or a CRT display, and an input device such as a keyboard and a mouse.

Furthermore, the sales server 20, the download server 30, and the user PC 50 may also have the same hardware configuration as that illustrated in FIG. 6.

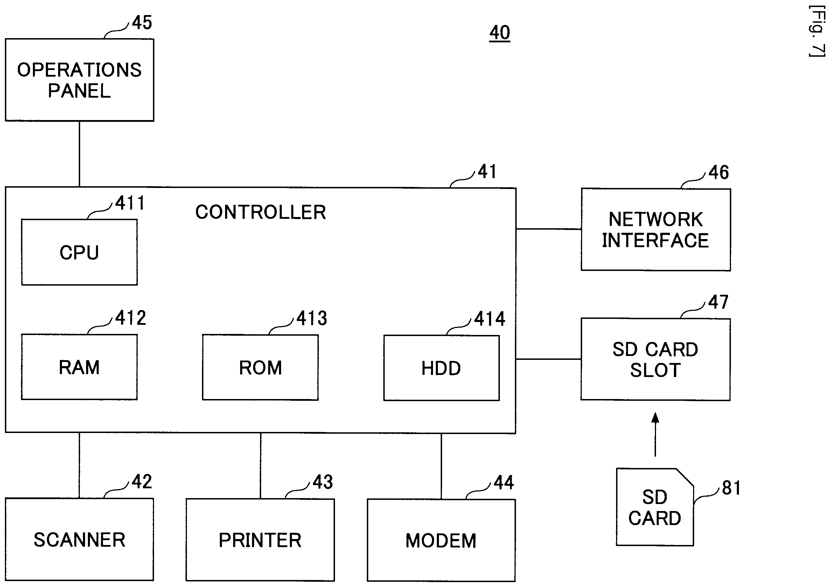

FIG. 7 illustrates a hardware configuration of the image forming apparatus 40 according to an embodiment of the present invention. As shown in FIG. 7, the image forming apparatus 40 includes hardware elements such as a controller 41, a scanner 42, a printer 43, a modem 44, an operations panel 45, a network interface 46, and an SD card slot 47.

The controller 41 includes a CPU 411, a RAM 412, a ROM 413, and an HDD 414. The ROM 413 stores various programs and data used by the programs. The RAM 412 is used as a storage area for loading programs and a work area of the loaded programs. The CPU 411 executes the program loaded in the RAM 412 to implement the functions (units shown in FIGS. 5A through 5C). The HDD 414 stores various programs and data used by the programs.

The scanner 42 is a hardware element for scanning an original to obtain image data. The printer 43 is a hardware element for printing the image data onto a sheet. The modem 44 is a hardware element for connecting the image forming apparatus 40 to a telephone line, and for executing transmission/reception of image data by fax communications. The operations panel 45 is a hardware element including an input unit such as buttons for receiving input from a user, and a display unit such as a liquid crystal panel. The network interface 46 is a hardware element for connecting the image forming apparatus 40 to a network (wired or wireless) such as a LAN (Local Area Network). The SD card slot 47 is used for reading a program recorded in an SD card 81. That is, the image forming apparatus 40 may not only execute the program recorded in the ROM 413, but may also load the program recorded in the SD card 81 into the RAM 412, and execute the program loaded in the RAM 412.

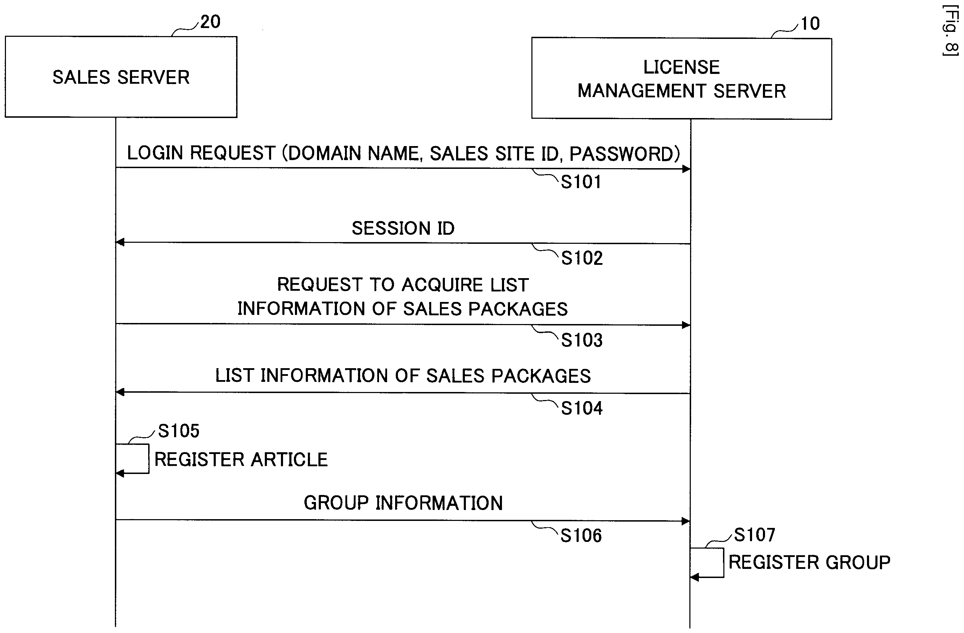

The following describes the processing procedure executed by the device management system 1 according to the first embodiment. FIG. 8 is a sequence diagram for describing the process performed by the sales server 20 for acquiring list information of the sales packages. The configuration of an article that is the sales target is determined for each sales region. The process shown in FIG. 8 is executed when determining the configuration of an article that is the sales target in a particular sales region.

For example, when the administrator of a sales site inputs, in the sales server 20, an instruction to acquire article information, the article registration unit 21 of the sales server 20 specifies a domain name, a sales site ID, and a password stored in a storage device of the sales server 20, and sends an authentication request to the activation server unit 11 of the license management server 10 (step S101).

The sales server authentication unit 117 that has received the authentication request authenticates the sales server 20 based on the information specified in the authentication request and the sales site master 118.

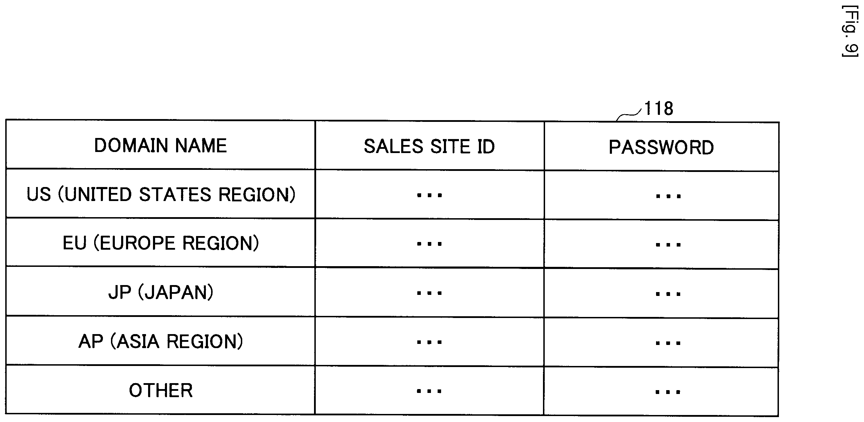

FIG. 9 illustrates a configuration of the sales site master 118. As shown in FIG. 9, in the sales site master 118, a domain name, a sales site ID, and a password are registered for each sales region.

The sales server authentication unit 117 cross-checks the domain name, the sales site ID, and the password included in the authentication request with the domain name, the sales site ID, and the password included in the sales site master 118, to authenticate the sales server 20. When the authentication is successful, the sales server authentication unit 117 opens a session, and returns a session ID to the sales management unit 22 (step S102). Thereafter, communications between the sales management unit 22 and the activation server unit 11 are performed based on the session ID.

Next, the article registration unit 21 sends a request to acquire list information of the sales packages to the sales server coordination unit 111 of the activation server unit 11 (step S103). In response to the request to acquire list information of the sales packages, the sales server coordination unit 111 acquires the list information from the sales package master 119, and returns the list information to the article registration unit 21 (step S104).

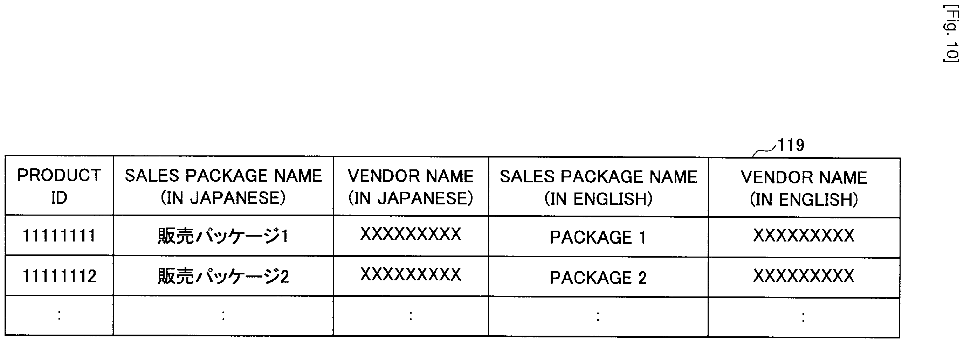

FIG. 10 illustrates a configuration of the sales package master 119. As shown in FIG. 10, in the sales package master 119, a product ID, a sales package name in Japanese, a vendor name in Japanese, a sales package name in English, and a vendor name in English are registered for each sales package. The list information returned in step S104 includes these information items for each sales package. The information may be registered in the sales package master 119 by, for example, the administrator of the license management server 10.

When the list information of the sales packages is received, the article registration unit 21 registers, in the article master 23, information input by the administrator of the sales site based on the list information (step S105). According to need, the administrator may define a group. Specifically, the administrator generates a group ID, and determines which sales packages are to belong to the group corresponding to the generated group ID. When the group is defined, the article registration unit 21 sends group information of the defined group (information including a group ID and product IDs of sales packages belonging to the group) to the sales server coordination unit 111 (step S106). Next, the sales server coordination unit 111 registers the received group information in the group ID master 120.

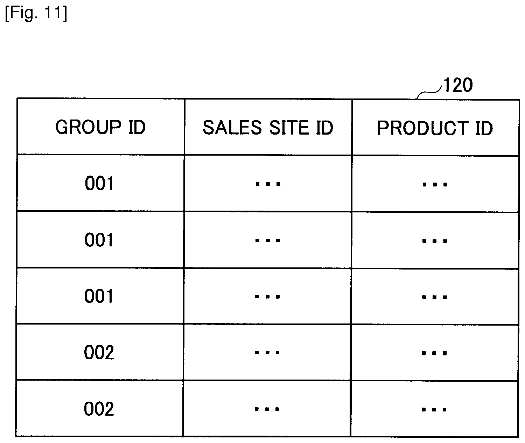

FIG. 11 illustrates a configuration of the group ID master 120. As shown in FIG. 11, in the group ID master 120, for each combination of a group ID and a sales site ID, a product ID of a sales package belonging to the group corresponding to the group ID is registered. A group ID and a sales site ID can be combined because each group ID is unique to a sales site. In the example shown in FIG. 11, there are plural records registered for the same group ID (for example, 001). In the group ID master 120 shown in FIG. 11, a product ID for one sales package is registered in each record. That is, FIG. 11 shows an example where three sales packages belong to the group having a group ID of "001".

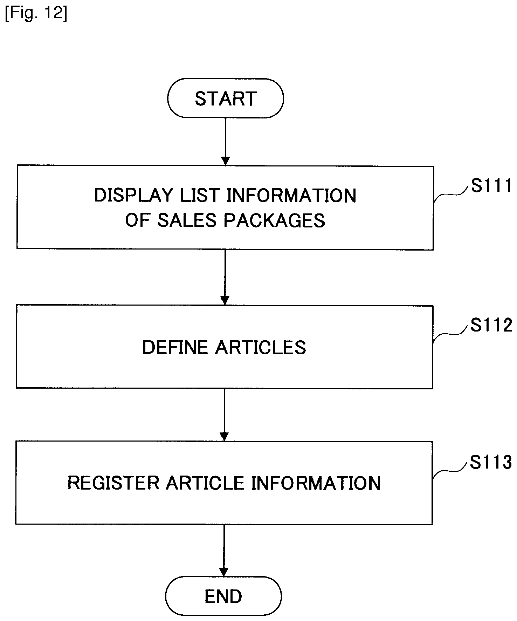

Next, a detailed description is given of step S105. FIG. 12 is a flowchart of a process of registering article information in the article master 23.

In step S111, the article registration unit 21 causes a display device of the sales server 20 to display list information of the sales packages received in step S104 shown in FIG. 8. Then, the administrator selects, from the list information, sales packages to be sales targets in the sales region to which the sales server 20 belongs, and inputs, for each of the selected sales packages, a license format, a validity period of the license, a volume number of the license, and an article name (step S112). Furthermore, according to need, the administrator may define a group and select sales packages to belong to the group.

Next, the article registration unit 21 registers, in the article master 23, article information defining configurations of the articles pertaining to the sales packages selected as sales targets (step S113).

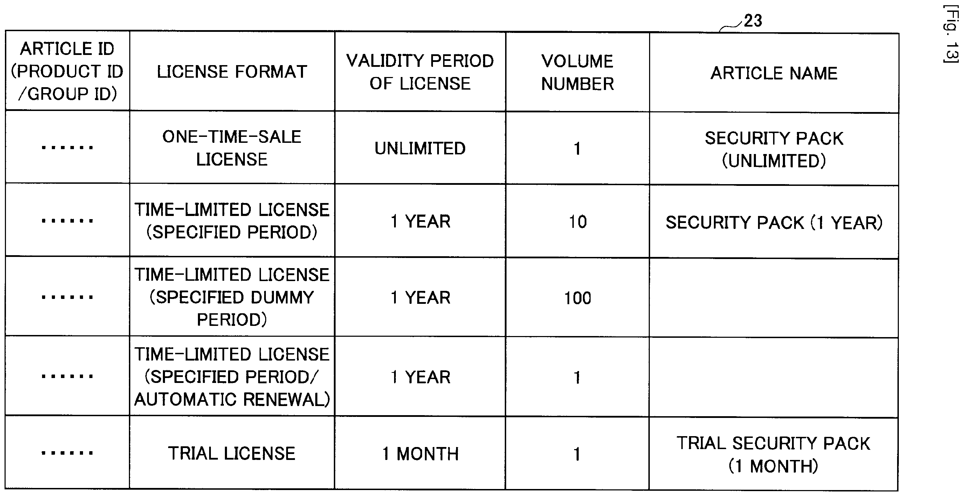

FIG. 13 illustrates a configuration of the article master 23 in the sales server 20. As shown in FIG. 13, the article master 23 is a table for managing an article ID (product ID or group ID), a license format, a validity period of the license, a volume number of the license, and an article name. The license format is information indicating the type of license of the sales package belonging to the article, such as a one-time-sale license, a time-limited license, and a trial license. The one-time-sale license can be used for an unlimited period of time after purchase. The time-limited license is valid (can be used) for a limited period of time. The trial license is provided for trial usage. The validity period of the license indicates the period during which the license is valid; this attribute is effective when the license format is a time-limited license and a trial license. The volume number of the license is a number indicating the volume (quantity) of licenses. For example, when an article having a volume number of two or more is purchased, a volume license is given to the article, which means the same sales package can be simultaneously used by a number of users within the volume number. The article name is a name of the article.

As article information is registered in the article master 23 of the sales server 20, the corresponding article can be sold in the sales region to which the sales server 20 belongs.

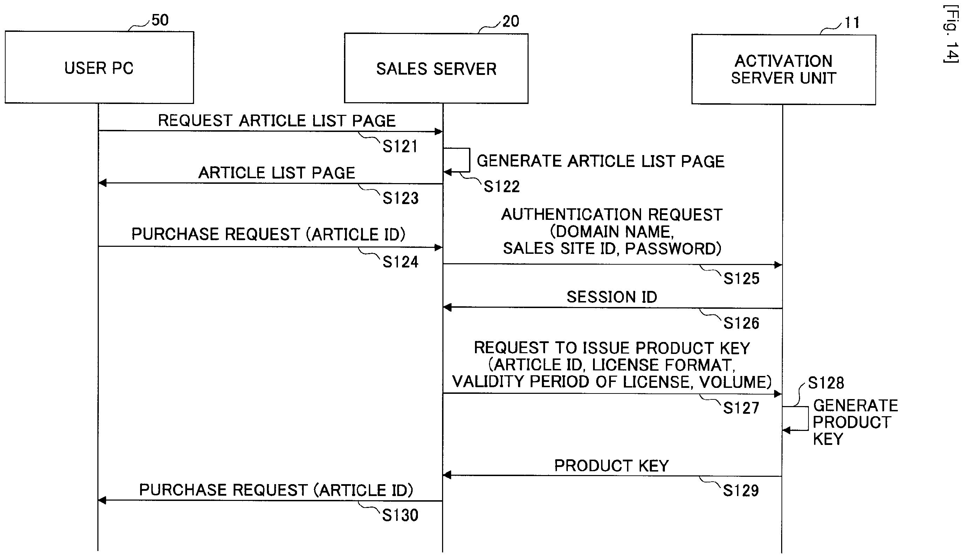

FIG. 14 is a sequence diagram for describing the process performed when selling an article. The sales server 20 shown in FIG. 14 belongs to the same sales district as that of the user PC 50 shown in FIG. 14.

A user in a certain user environment E1 inputs, in a Web browser 51 of the user PC 50, a URL of a Website (article list page) displaying a list of articles that can be purchased (that are sales targets). Then, the Web browser 51 sends a request to acquire an article list page to the sales management unit 22 of the sales server 20 (step S121).

Next, the sales management unit 22 generates an article list page based on the article master 23 (step S122). Specifically, the sales management unit 22 generates HTML data for displaying an article list page including an article name, a license format, a validity period for the license, a volume number, and a tick box, for each article registered in the article master 23. The tick box is used for selecting an article as a purchase target. Next, the sales management unit 22 returns the generated article list page to the Web browser 51 (step S123). The Web browser 51 causes a display device of the user PC 50 to display the received article list page.

In the article list page, when the user ticks the tick box for an article selected as a purchase target, and presses the corresponding purchase button, the Web browser 51 sends a purchase request including the article ID of the article that has been selected as the purchase target, to the sales management unit 22 (step S124). The article list page is defined such that the selected article ID is sent when the purchase button is pressed. In the article list page, plural articles can be selected. Therefore, in step S124, plural article IDs may be included in the purchase request.

Next, the sales management unit 22 specifies a domain name, a sales site ID, and a password, and sends an authentication request to the activation server unit 11 of the license management server 10 (step S125). The sales server authentication unit 117 of the activation server unit 11 authenticates the sales server 20 by cross-checking the domain name, the sales site ID, and the password included in the authentication request with the domain name, the sales site ID, and the password included in the sales site master 118. When the authentication is successful, the sales server authentication unit 117 opens a session, and returns a session ID to the sales management unit 22 (step S126). Thereafter, communications between the sales management unit 22 and the activation server unit 11 are performed based on the session ID.

Next, the sales management unit 22 acquires, from the article master 23, the license format, the validity period of the license, and the volume number corresponding to the article ID (product ID or group ID) included in the purchase request. Then, the sales management unit 22 specifies the article ID (product ID or group ID), the license format, the validity period of the license, and the volume number, and sends a request to issue a product key to the product key issuing unit 112 of the activation server unit 11 (step S127).

In response to the request to issue a product key, the product key issuing unit 112 generates a product key (step S128). The product key issuing unit 112 returns a product key to the sales management unit 22 (step S129). When a request is given to issue product keys for plural articles, a product key is generated for each article.

When the product key is received, the product key notification unit 24 of the sales server 20 returns HTML data including the product key to the Web browser 51 (step S130). The Web browser 51 causes the display device of the user PC 50 to display the HTML data. Accordingly, the user can acknowledge the product key that has been issued for the purchased article. The product key notification unit 24 may distribute a product key by sending an e-mail describing the product key to the user PC 50.

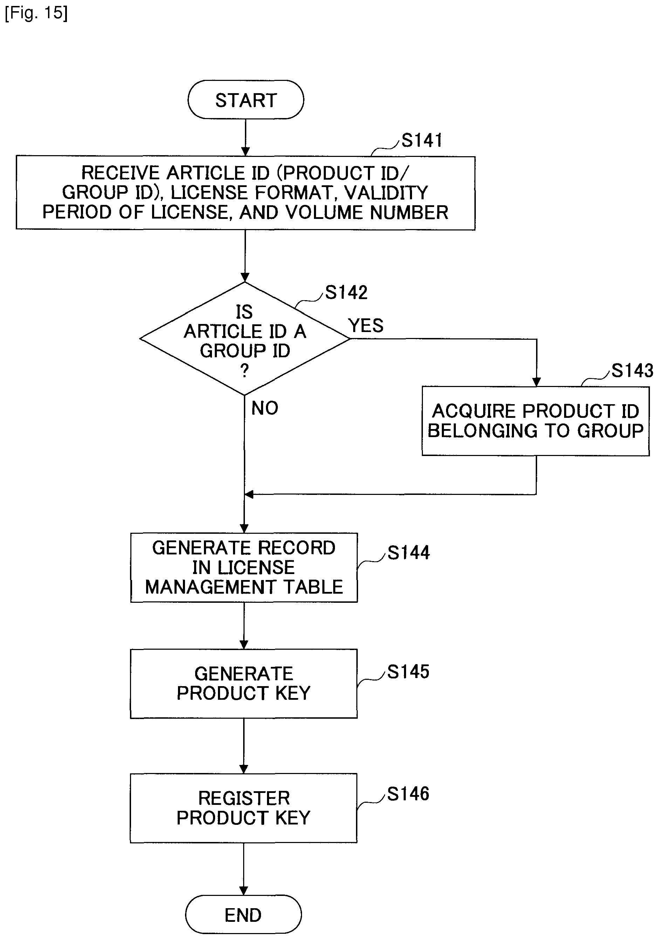

Next, a detailed description is given of step S128. FIG. 15 is a flowchart of a process of generating a product key performed by the product key issuing unit 112.

In step S141, the product key issuing unit 112 receives the article ID (product ID or group ID), the license format, the validity period of the license, and the volume number. Next, the product key issuing unit 112 determines whether the received article ID is a group ID (step S142). Specifically, the product key issuing unit 112 searches the group ID master 120 for a group ID that matches the article ID. When the product key issuing unit 112 finds a group ID that matches the article ID (YES in step S142), the product key issuing unit 112 acquires all of the product IDs (i.e., product IDs of the sales packages belonging to the group) from the group ID master 120 (step S143).

When the result of step S142 is NO, or after step S143, the product key issuing unit 112 generates a record for registering a received product ID or a product ID acquired from the group ID master 120, in the license management table 121 (step S144). Therefore, when plural product IDs have been acquired from the group ID master 120, plural records are generated. Furthermore, the product key issuing unit 112 generates a number of records corresponding to the volume number for the same product ID. Therefore, if the volume number is two or more, two or more records are generated for the same product ID.

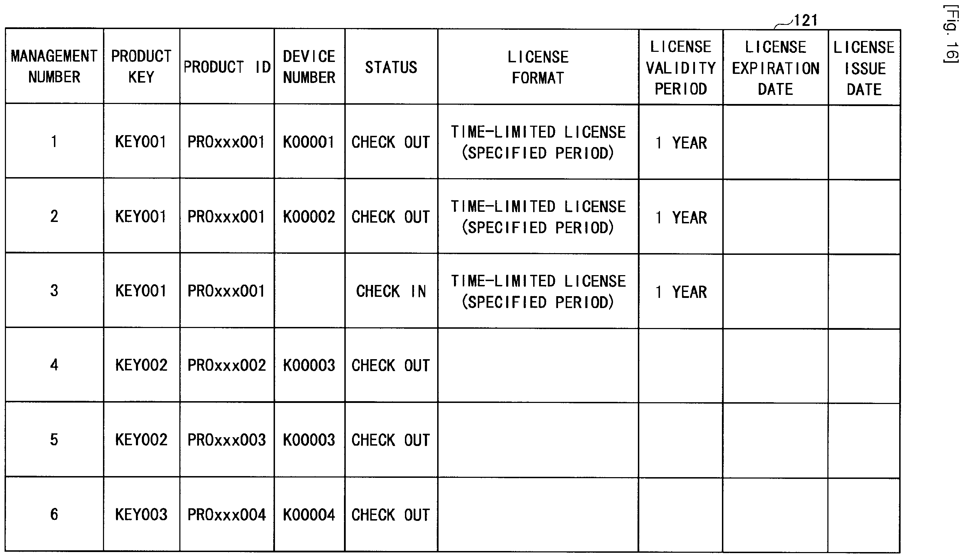

FIG. 16 illustrates a configuration of the license management table 121. As shown in FIG. 16, the items included in the license management table 121 for each license issued for a sales package are a management number, a product key, a product ID, a device number, a status, a license format, a license validity period, a license expiration date, and a license issue date.

Among these items, as for the product ID, the license format, and the license validity period, values received from the sales management unit 22 are registered in step S144. When plural records have been generated, the same value is registered for all of the generated records. However, in the case of a group license (when product IDs for sales packages have been acquired based on a group ID), the acquired product IDs are registered in the generated records.

The management number is an identifier (number) uniquely assigned to each record, as records are generated for the license management table 121. The product key is generated at a latter stage. The device number corresponds to the image forming apparatus 40 that is specified as the device for using the sales package when the license file 90 is issued. The device number is identification information (device identifier) for uniquely identifying each of the image forming apparatuses 40. The status is information indicating the status of the license. In the present embodiment, the statuses of the license are "no license", "check out", and "check in". "No license" is a status where a license is not issued. "Check out" is a status where the license is being used. "Check in" is a status where the license is released (made available, usable). As for the status, a value is not registered at step S144. The license expiration date is an expiration date of the license (license file 90) calculated based on the license validity period when the license file 90 is issued. The license issue date is the date when the license (license file 90) is issued, which is registered when the license (license file 90) is issued.

Next, the product key issuing unit 112 generates one product key (step S145). Even if the article ID received at step S141 is a group ID or even if the volume number is two or more, only one product key is generated.

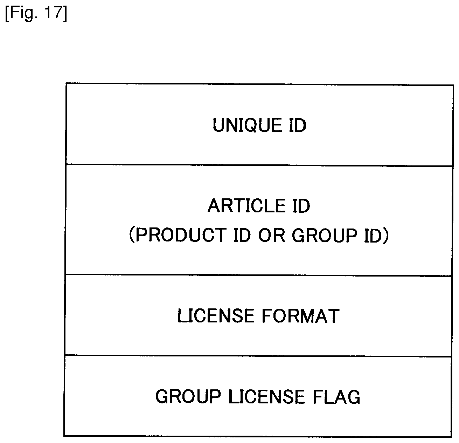

FIG. 17 illustrates a configuration of the product key. As shown in FIG. 17, the product key is data including a unique ID, an article ID, a license format, and a group license flag.

The unique ID is uniquely generated for the product key when the product key is generated. The uniqueness of the product key is ensured by the unique ID. An article ID is a product ID or a group ID received at step S141, i.e., a product ID or a group ID of the sales package or group included in the purchased article. The license format is received in step S141. The group license flag is a parameter indicating whether the article ID in the product key is a group ID (true) or not (false). The product key issuing unit 112 sets the value of the group license flag as true when the received article ID is a group ID.

Next, the product key issuing unit 112 registers a generated product key in a record generated in step S144, and renews the license management table 121 by changing the status of the record to "check in" (step S146). When plural records have been generated in step S144 (in the case of a group license or when the volume number is two or more (volume license)), the same product key is registered in the plural records.

In the license management table 121 shown in FIG. 16, the records of management numbers 1 through 3 correspond to a volume license. The records of the same volume license have the same product key and product ID. The records of management numbers 4 and 5 correspond to a group license (a license for a group). The records of the same group license have the same product key. However, the records of the same group license correspond to different sales packages, and therefore the records have different product IDs.

A product key generated as above is sent to the sales management unit 22 of the sales server 20 in step S129 of FIG. 14, and is then transferred from the sales management unit 22 to the Web browser 51 of the user PC 50.

Next, the sales package included in the article for which the product key has been issued is installed.

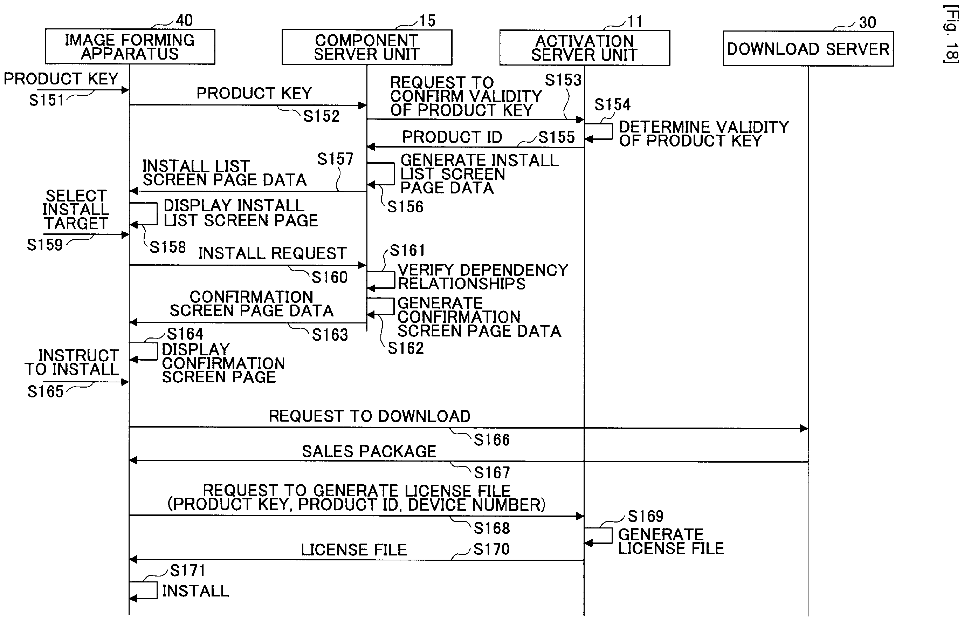

FIG. 18 is a sequence diagram for describing the process of installing the sales package.

A user who has obtained a product key inputs the product key in the image forming apparatus 40 in which the sales package corresponding to the product key is to be used (step S151). The product key is input via a function extension setting menu screen page described below, which is displayed on, for example, the operations panel 45.

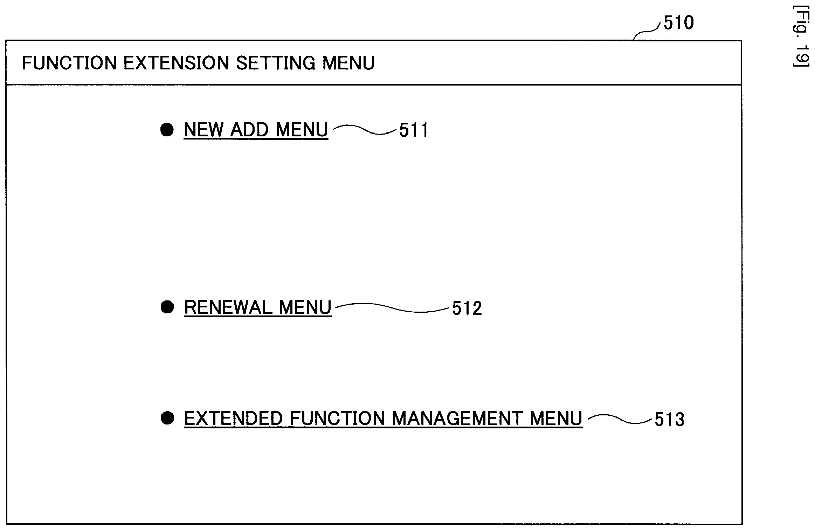

FIG. 19 illustrates an example of a displayed function extension setting menu screen page. A function extension setting menu screen page 510 is for displaying various menus regarding function extension of the image forming apparatus 40. In response to a predetermined operation input, the UI control unit 426 displays the function extension setting menu screen page 510 on the operations panel 45. In the function extension setting menu screen page 510, when new add menu 511 is selected, the UI control unit 426 causes the operations panel 45 to display a product key input screen page.

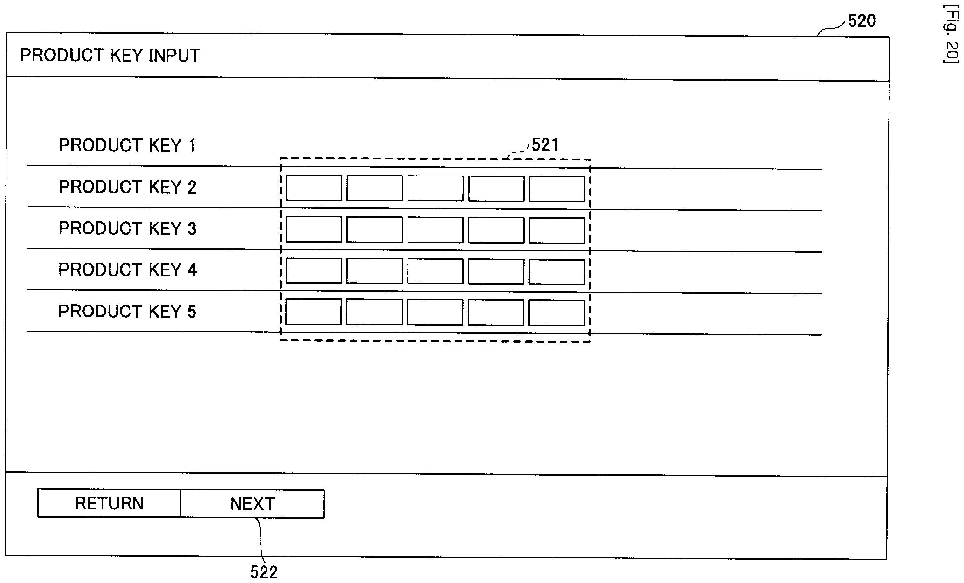

FIG. 20 illustrates an example of a displayed product key input screen page. A product key input screen page 520 includes a product key input field 521. In step S151, the product key is input in the product key input field 521.

When the product key has been input in the product key input field 521 and a next button 522 is selected, the install unit 421 specifies the input product key and sends a request to generate an install list screen page for a sales package corresponding to the product key, to the install support unit 152 of the component server unit 15 (step S152).

Next, when the request to generate an install list screen page has been received, the install support unit 152 sends, to the product key verification unit 113 of the activation server unit 11, a request to confirm the validity of the product key specified in the received request (step S153). The product key verification unit 113 determines the validity of the product key with reference to the license management table 121 (step S154). Specifically, the product key verification unit 113 determines that the product key is valid when a record including the product key is registered, the status of the record including the product key is not "check out", and the license expiration date of the record including the product key does not exceed the present date (or a value of a license expiration date is not registered). Otherwise, the product key verification unit 113 determines that the product key is invalid. When the product key is valid, the product key verification unit 113 returns, to the install support unit 152, a product ID associated with the product key in the license management table 121 (i.e., the product ID of the sales package) (step S155). Thus, when the product key is for a group license or a volume license, plural product IDs are returned.

Meanwhile, when the product key that is the determination target is determined as being invalid, the install support unit 152 returns, to the install unit 421, error screen page data for displaying an error screen page indicating that the product key is invalid. In response to receiving the error screen page data, the install unit 421 causes the UI control unit 426 to execute a process of displaying an error screen page based on the error screen page data.

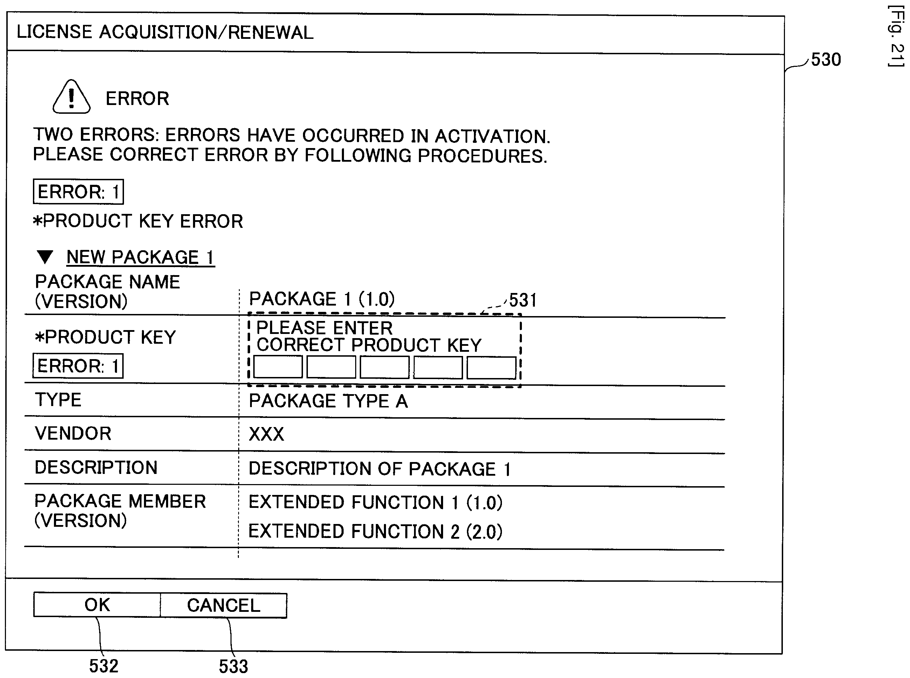

FIG. 21 illustrates an example of a displayed error screen page when the product key is invalid. An error screen page 530 displays a message for indicating a product key error (product key is invalid) and a product key input field 531. The user can input the correct product key in the product key input field 531. When the correct product key has been input in the product key input field 531 and an OK button 532 has been selected, the steps from and beyond step S152 are executed once again. Meanwhile, when a cancel button 533 is selected, the process of installing the sales package is cancelled.

In step S155, when a determination result is received, which indicates that the product key that is the determination target is valid, the install support unit 152 generates, with reference to the component management table 155, install list screen page data for a sales package corresponding to the product ID returned from the product key verification unit 113 (step S156).

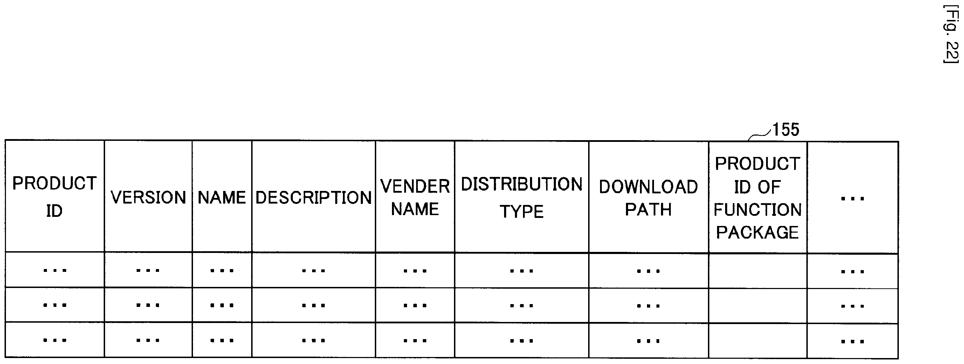

FIG. 22 illustrates an example of the component management table 155. As shown in FIG. 22, items registered in the component management table 155 for each sales package include a product ID, a version, a name, a description, a vender name, a distribution type, a download path, and product IDs of function packages. The version is a version of the sales package. The name is a name of the sales package. The description is a description of the sales package. The vendor name is the name of the vendor of the sales package. The distribution type is a distribution type of the sales package. The download path indicates position information of the sales package (acquiring position) in the sales package management unit 32 of the download server 30. In the present embodiment, a URL (Uniform Resource Locator) is used as the position information. The product IDs of function packages correspond to a list of product IDs of function packages belonging to the sales package.

Contents of the component management table 155 are registered as the component management unit 154 periodically acquires sales packages from the download server 30 and analyzes the contents of the sales packages. Specifically, a product ID, a version, a name, a description, a vendor name, and a distribution type recorded in a sales package information file stored in the sales package are registered as the product ID, the version, the name, the description, the vendor name, and the distribution type in the component management table 155. A product ID recorded in a function package information file stored in each function package included in the sales package is registered as the product ID of the function package in the component management table 155. The download path is reported from the download server 30 when acquiring the sales package.

Next, the install support unit 152 sends the generated install list screen page data to the install unit 421 of the image forming apparatus 40 (step S157). The install unit 421 inputs the received install list screen page data to the UI control unit 426. The UI control unit 426 causes the operations panel 45 to display an install list screen page based on the install list screen page data (step S158).

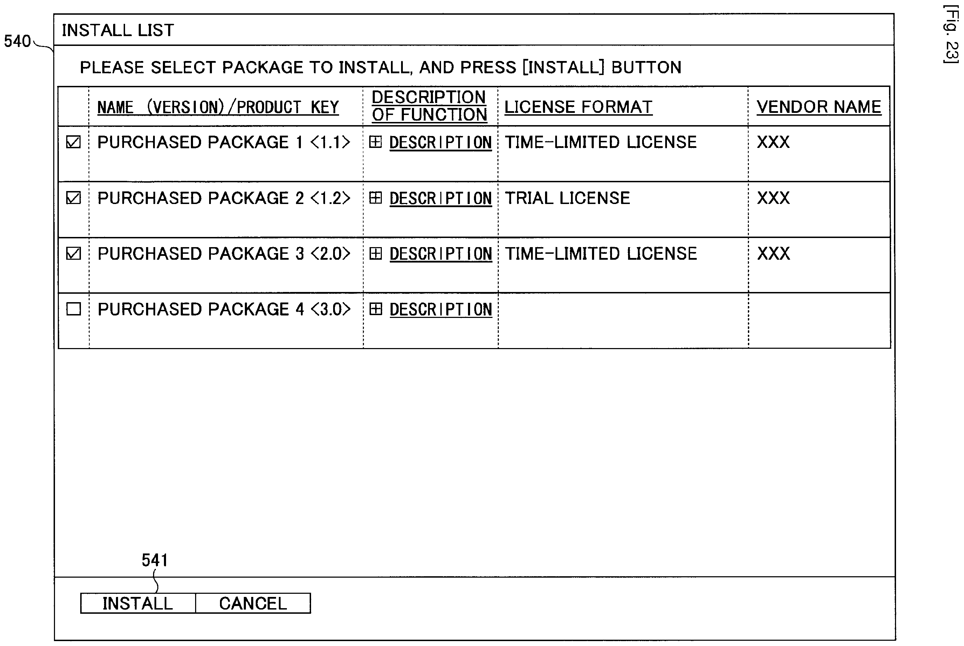

FIG. 23 illustrates an example of a displayed install list screen page. An install list screen page 540 displays a list of sales packages that may be install targets (install candidates), and tick boxes corresponding to the sales packages for selecting which sales package is to be installed. The user ticks the tick box of a sales package selected as an install target. In FIG. 23, packages 1 through 4 are install candidates, and packages 1 through 3 are selected as install targets.

In the install list screen page 540, when the tick boxes of sales packages selected as install targets are ticked, and an install button 541 is selected (step S159), the install unit 421 specifies the product IDs of the sales packages that are ticked in the install list screen page 540 (selected as install targets) and configuration information of all of the sales packages installed in the image forming apparatus 40, and sends a request to install the sales packages selected as install targets to the install support unit 152 of the component server unit 15 (step S160).

The product IDs of the sales packages ticked in the install list screen page 540 are acquired from the install list screen page data. Furthermore, the configuration information of all of the sales packages installed in the image forming apparatus 40 is acquired from the install information management table 427.

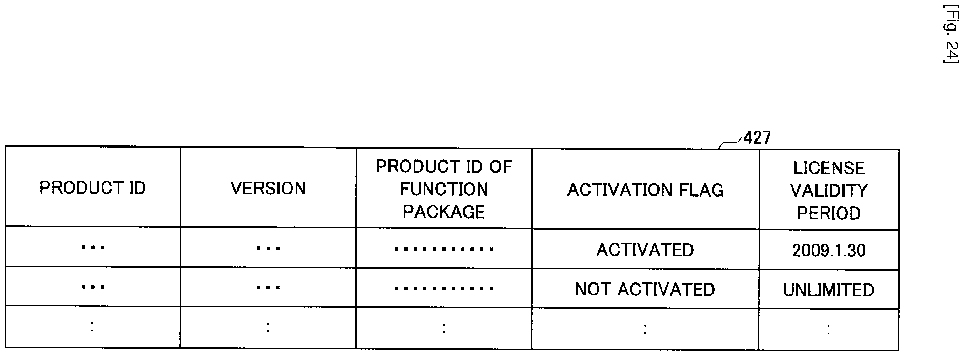

FIG. 24 illustrates a configuration of the install information management table 427. As shown in FIG. 24, items registered in the install information management table 427 for each sales package installed in the image forming apparatus 40 include a product ID, a version, product IDs of function packages, an activation flag, and an expiration date.

The product IDs of the function packages are a list of product IDs of function packages belonging to the sales package. The activation flag indicates whether the sales package is activated (has already been activated or not). The license expiration date is the expiration date of a license that has been issued for the sales package. The activation flag and the license expiration date of each function package are in accordance with the activation flag and the license expiration date of the sales package to which the function package belongs. Contents of the install information management table 427 are registered when the sales package is installed, as described below.

The configuration information sent in step S160 includes all information registered in the install information management table 427.

Next, the install support unit 152 causes the dependency relationship determination unit 151 to verify the dependency relationships of the sales packages corresponding to the product IDs included in the install request (step S161). Specifically, the dependency relationship determination unit 151 determines whether another function package on which a function package included in the sales package corresponding to the product ID depends (uses), is already installed in the image forming apparatus 40.

Next, the install support unit 152 generates HTML data (confirmation screen page data) for displaying a confirmation screen page in accordance with the verification results of dependency relationships (step S162), and returns the confirmation screen page data to the install unit 421 (step S163). Details of steps S161 and S162 are given below.

Next, the install unit 421 inputs the received confirmation screen page data to the UI control unit 426. The UI control unit 426 causes the operations panel 45 to display a confirmation screen page based on the confirmation screen page data (step S164).

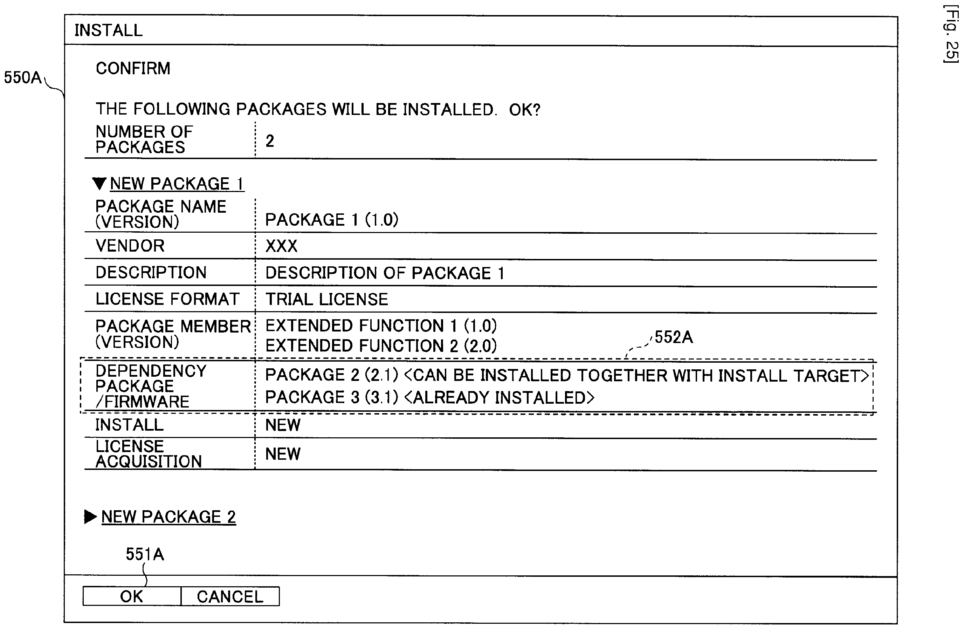

FIG. 25 illustrates an example of a displayed confirmation screen page when there is no problem with the dependency relationship. As shown in FIG. 25, a confirmation screen page 550A indicates that there is no problem with the dependency relationship for a sales package (package 1) selected as the install target. Specifically, a region 552A indicates that the sales packages (dependency packages) on which package 1 depends are either install targets to be installed at the same time as (together with) package 1 or already installed in the image forming apparatus 40.

When an OK button 551A in the confirmation screen page 550A is selected (step S165), the install unit 421 specifies a URL for each sales package selected as an install target, and sends a request to download the sales packages to a download process unit 31 (see FIGS. 5A through 5C) of the download server 30 (step S166). Specifically, the OK button 551A is associated with the URLs of the sales packages and a transmission command of the download request.

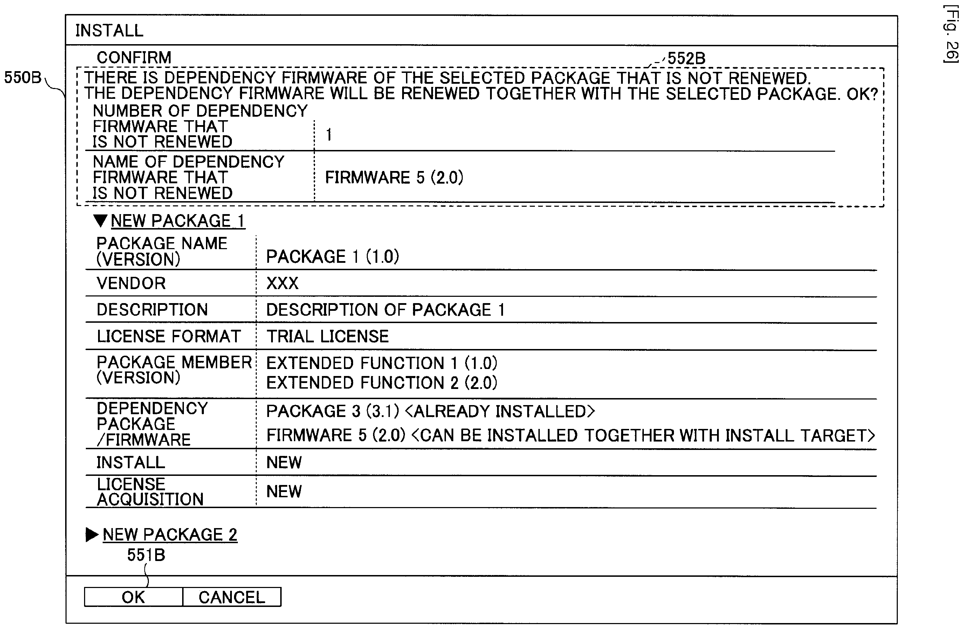

FIG. 26 illustrates an example of a displayed confirmation screen page when the dependency package can be installed together with the package that is the install target. A region 552B in a confirmation screen page 550B shown in FIG. 26 indicates that among the dependency packages of the sales package selected as an install target, there is a dependency package that is not installed in the image forming apparatus 40 and that is not an install target. Furthermore, the region 552B indicates that this dependency package can be installed together with package 1, and also indicates a question to confirm whether such a dependency package is to be installed together with package 1. Whether or not a dependency package can be installed together with the sales package that is an install target is determined based on the distribution type of the dependency package.

When an OK button 551B is selected in the confirmation screen page 550B (step S165), the install unit 421 specifies a URL for each sales package selected as an install target and for each sales package to be installed together (dependency package), and sends a request to download the sales packages to the download process unit 31 of the download server 30 (step S166). Specifically, the OK button 551B is associated with the URLs of the sales packages selected as install targets, the URLs of the sales packages that are to be installed together (dependency packages), and a transmission command of the download request.

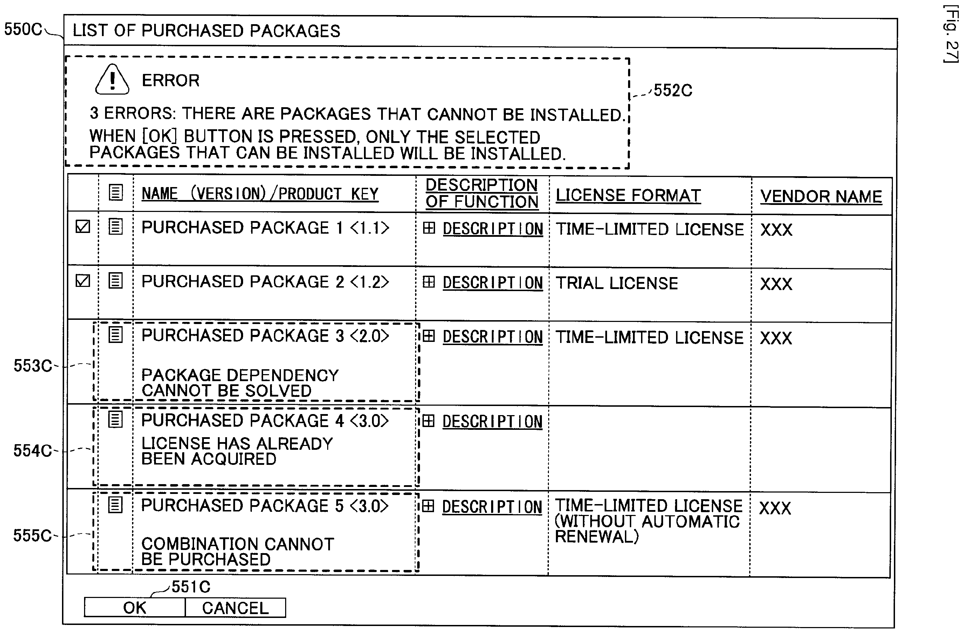

FIG. 27 illustrates an example of a displayed confirmation screen page when the dependency package cannot be installed together with the package that is the install target. An area 552C of a confirmation screen page 550C shown in FIG. 27 indicates that there are three sales packages that cannot be installed. Details regarding the three sales packages are indicated in areas 553c, 554c, and 555c. The area 553c indicates that the dependency relationship for package 3 cannot be satisfied (the dependency package of package 3 cannot be installed together with package 3). The area 554c indicates that the license of package 4 is already acquired (used). The area 555c indicates that package 5 cannot be installed together with other packages that are install targets (packages 1 and 2 in FIG. 27). In FIG. 27, it is assumed that packages 1 through 5 have been selected as install targets.

When an OK button 551C is selected in the confirmation screen page 550C (step S165), the install unit 421 specifies a URL for each sales package that can be installed, and sends a request to download the sales packages to the download process unit 31 of the download server 30 (step S166). Specifically, the OK button 551C is associated with the URLs of the sales packages that can be installed and a transmission command of the download request.

In response to the download request of step S166, the download process unit 31 acquires a sales package identified by the URL specified in the download request from the sales package management unit 32, and transfers the sales package to the install unit 421 (step S167). The install unit 421 saves the received sales package in a temporary storage area (for example, a temporary folder) in the HDD 414.

When the process of downloading the sales package ends, the install unit 421 specifies the product key input at step S151, the product ID of the sales package selected as the install target, and the device number of the image forming apparatus 40 recorded in the ROM 413 or the HDD 414, and sends a request to generate the license file 90 (request to use the license) to the license issuing unit 115 of the activation server unit 11 (step S168). Next, the license issuing unit 115 generates the license file 90 based on the product key and the license management table 121 (step S169).

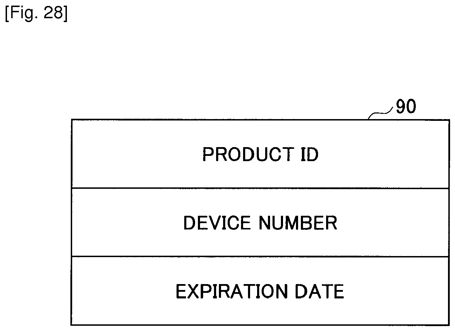

FIG. 28 illustrates a configuration of the license file 90. As shown in FIG. 28, the license file 90 includes a product ID, a device number, and an expiration date. The product ID is a product ID of the sales package for which a license is given (usage is allowed) by the license file 90. The device number is a device number of the image forming apparatus 40 that is allowed to use the sales package corresponding to the product ID by the license file 90. The expiration date is the expiration date of the license file 90, i.e., the expiration date of the license given by the license file 90.

As the product ID of the license file 90, a product ID corresponding to the product key included in the request for generating the license file 90 is registered. When the product key corresponds to a group license, i.e., when there are plural different product IDs registered in the license management table 121 for the product key, the license issuing unit 115 generates the license file 90 for each of the sales packages. Thus, even if the product key corresponds to a group license, a product ID of a sales package is registered as the product ID of the license file 90.

A device number included in the request for generating the license file 90 is registered as the device number in the license file 90. A time point (for example, month/date/year) obtained by adding, to the present time point, the validity period registered in the license management table 121 for the product key and the product ID included in the request for generating the license file 90, is registered as the expiration date of the license file 90.

Next, the license issuing unit 115 returns the generated license file 90 to the install unit 421 (step S170). The install unit 421 saves the received license file 90 in a temporary storage area (for example, a temporary folder) in the HDD 414.

When the process of receiving the license file 90 ends, the user PC 50 performs a process of installing the sales package (step S171). Details of the installing process are given below.

In the above description, an instruction to acquire a sales package is sent to the image forming apparatus 40 according to the install list screen page data at step S157 or the confirmation screen page data at step S163. However, the sales package itself (program entity) may be sent to the image forming apparatus 40 at these timings (steps). In this case, the component server unit 15 downloads the sales package that is an install target from the download server 30, and transfers the downloaded sales package to the image forming apparatus 40.

Next, a detailed description is given of a process executed by the component server unit 15 of the license management server 10 in steps S161 and S162.

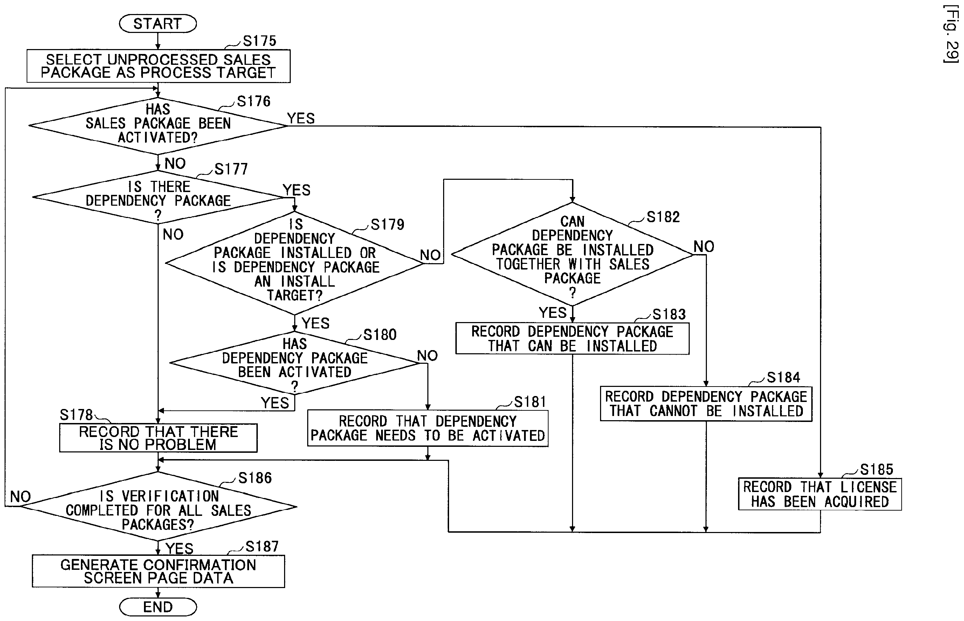

FIG. 29 is a flowchart of a process of verifying the dependency relationship and a process of generating confirmation screen page data performed by the component server unit 15.

In step S175, the dependency relationship determination unit 151 selects, as a process target, a product ID (i.e., sales package) among the product IDs received in the request for verifying the dependency relationships at step S160 of FIG. 18. Next, the dependency relationship determination unit 151 determines whether the sales package that is currently the process target (hereinafter, "current sales package") has already been activated, based on an activation flag included as a configuration information item of the current sales package among the configuration information items of the sales package received in step S160 (step S176). When the current sales package has not been activated (NO in step S176), the dependency relationship determination unit 151 determines whether there is a sales package (dependency package) on which the current sales package depends, based on the component management table 155 (see FIG. 22) and the dependency relationship management table 156 (step S177).

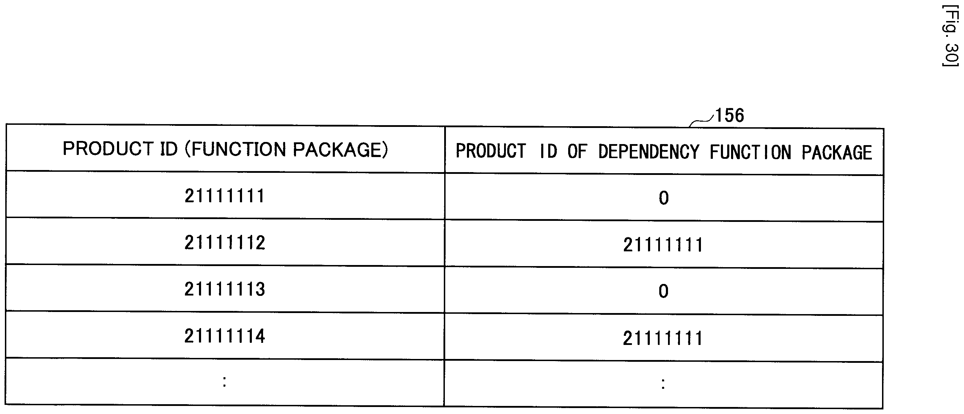

FIG. 30 illustrates a configuration of the dependency relationship management table 156. As shown in FIG. 30, in the dependency relationship management table 156, for each function package, a product ID is registered, and a product ID of another function package on which the function package depends is also registered in association with the function package. There may be plural product IDs of other function packages on which the function package depends. In FIG. 30, "0" means that there is no dependency package.

Similar to the component management table 155, contents of the dependency relationship management table 156 are registered as the component management unit 154 periodically analyzes the contents of the acquired sales packages. Specifically, contents of package dependency information recorded in a function package information file of each function package included in a sales package are registered in the dependency relationship management table 156, as a product ID of a function package on which another function package depends.

In step S177, the dependency relationship determination unit 151 acquires a list of product IDs of function packages registered with respect to the product ID of the current sales package in the component management table 155. Next, the dependency relationship determination unit 151 identifies the function package (hereinafter, "dependency function package") on which each of the function packages depends, based on the acquired product IDs of function packages and the dependency relationship management table 156. When there is a dependency function package, the dependency relationship management table 156 identifies the sales package to which the identified dependency function package belongs, by referring to the component management table 155 in a reverse manner. The identified sales package is the dependency package of the current sales package. There may be plural dependency packages. Furthermore, the dependency relationships among the function packages are recursively searched.

When there is no dependency package (NO in step S177), the dependency relationship determination unit 151 records, in the memory device 103, information indicating that there is no problem with respect to the dependency relationship of the current sales package, in association with the product ID of the current sales package (step S178). When there is a dependency package (YES in step S177), the dependency relationship determination unit 151 determines whether the dependency package is already installed in the image forming apparatus 40 or whether the dependency package is selected as an install target, based on configuration information for each sales package received in step S160 or based on a product ID of a sales package that is an install target received in step S160 (step S179). That is, if configuration information corresponding to a dependency package is received, the dependency relationship determination unit 151 determines that the dependency package is already installed in the image forming apparatus 40. Furthermore, if the product ID of the dependency package is included among the product IDs of the install targets, the dependency relationship determination unit 151 determines that the dependency package is an install target.

If the dependency package is already installed (YES in step S179), the dependency relationship determination unit 151 determines whether the dependency package has already been activated (whether the dependency package is in a usable state), based on the received configuration information for each sales package (step S180). The dependency relationship determination unit 151 determines whether the dependency package has been activated based on an activation flag included in the configuration information corresponding to the dependency package.

When the dependency package has been activated or when the dependency package is an install target (YES in step S180), the dependency relationship determination unit 151 records, in the memory device 103, information indicating that there is no problem with respect to the dependency relationship of the current sales package, in association with the product ID of the current sales package (step S178). When there is a dependency package that has not been activated (NO in step S180), the dependency relationship determination unit 151 records, in the memory device 103, information indicating that there is a dependency package that needs to be activated for the current sales package, in association with the product ID of the current sales package (step S181).

If there is a dependency package that is not yet installed (NO in step S179), the dependency relationship determination unit 151 determines whether the dependency package can be installed together with the current sales package based on the component management table 155 (step S182). That is, in the component management table 155, when the distribution type corresponding to the product ID of the dependency package indicates that activation is unnecessary, the dependency relationship determination unit 151 determines that the dependency package can be installed together with the current sales package. When the distribution type corresponding to the dependency package indicates that activation is necessary, the dependency relationship determination unit 151 determines that the dependency package cannot be installed together with the current sales package.

When there is a dependency package that can be installed together with the current sales package (YES in step S182), the dependency relationship determination unit 151 records, in the memory device 103, the product ID of the dependency package as a product ID of a dependency package that can be installed together with the current sales package, in association with the product ID of the current sales package (step S183). When there is a dependency package that cannot be installed together with the current sales package (NO in step S182), the dependency relationship determination unit 151 records, in the memory device 103, the product ID of the dependency package as a product ID of a dependency package that cannot be installed together with the current sales package, in association with the product ID of the current sales package (step S184).

When the current sales package has been activated (YES in step S176), the dependency relationship determination unit 151 records, in the memory device 103, information indicating that a license has been acquired in association with the product ID of the current sales package (step S185).

When the process of steps S175 through S185 has been performed for all of the product IDs in the request for verifying the dependency relationships received in step S160 of FIG. 18 (YES in step S186), the install support unit 152 generates confirmation screen page data based on information recorded in the memory device 103 (step S187). For example, when there are no problems in the dependency relationships for all of the sales packages, confirmation screen page data for displaying the confirmation screen page 550A shown in FIG. 25 is generated. When information pertaining to step S183 is recorded, confirmation screen page data for displaying the confirmation screen page 550B as shown in FIG. 26 is generated. Furthermore, when information pertaining to step S181, S184, or S185 is recorded, confirmation screen page data for displaying the confirmation screen page 550C as shown in FIG. 27 is generated.

In each confirmation screen page data item, a URL of a sales package that can be installed is associated with the OK button. The URL of a sales package that can be installed can be acquired from the download path of the component management table 155.

The above describes an example of indicating dependency packages in units of sales packages. However, the dependency packages may be indicated in units of function packages. Even when the dependency packages are indicated in units of function packages, in the present embodiment, the sales packages are the units available in the market, and therefore the install target would be a sales package including the function packages.

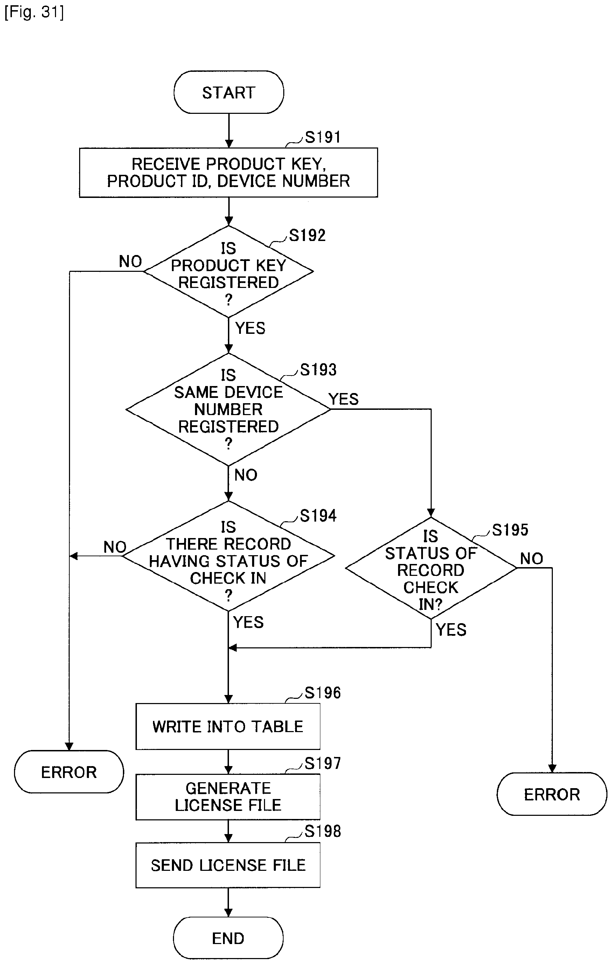

Next, a detailed description is given of a process executed by the activation server unit 11 of the license management server 10 in steps S168 through S170 in FIG. 18. FIG. 31 is a flowchart of a process of generating the license file 90 performed by the activation server unit 11. In FIG. 31, a single product key is described as the process target. Therefore, when plural product keys are received, steps S192 and onward are performed for each of the product keys.

In step S191, the license issuing unit 115 receives, from the install unit 421 of the image forming apparatus 40, a license usage request including a product key, a product ID, and a device number. Next, the license issuing unit 115 determines whether a license corresponding to the product key can be used. Specifically, the license issuing unit 115 confirms whether the received product key is registered in the license management table 121 (step S192). When the product key is registered (YES in step S192), the license issuing unit 115 confirms whether the same device number as the received device number is registered in the license management table 121 in association with the product key (step S193). When the same device number is not registered (NO in step S193), the license issuing unit 115 confirms whether the license management table 121 includes a record having a status of "check in" among the records corresponding to the product key and the received product ID (step S194). When such a record is included (YES in step S194), the license issuing unit 115 records the received device number in the record, and changes the status of the record to "check out" (step S196). That is, the license issuing unit 115 records that the license corresponding to the product key is being used. Furthermore, when a "license validity period" is recorded for the record (i.e., the record corresponds to a time-limited license), the license issuing unit 115 records a license expiration date obtained by adding the license validity period to the present date in the record.

Next, the license issuing unit 115 generates the license file 90 (see FIG. 28) including the product ID, the device number, and the license expiration date in the record (step S197). The license file 90 is generated for each record in the license management table 121, i.e., for each license corresponding to a sales package. Next, the license issuing unit 115 returns the generated license file 90 to the install unit 421 of the image forming apparatus 40 (step S198).

Meanwhile, when the same device number as the received device number is registered in a record in association with the product key (YES in step S193), the license issuing unit 115 confirms whether the status of the record is "check in" (step S195). When the status is "check in" (YES in step S195), steps S196 and onward are performed.

When a record corresponding to the product key is not included in the license management table 121 (NO in step S192), or when a record having a status of "check in" among the records corresponding to the product key and the received product ID is not included in the license management table 121 (NO in step S194), or when the record in which the same device number as the received device number is registered in association with the product key does not have a status of "check in" (NO in step S195), the license issuing unit 115 determines that an error has been detected, and does not generate the license file 90, i.e., does not issue a license.

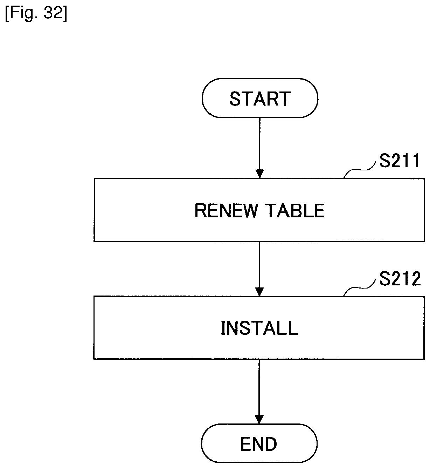

Next, a detailed description is given of the process executed by the image forming apparatus 40 in step S171 in FIG. 18. FIG. 32 is a flowchart of a process of installing a sales package performed by the image forming apparatus 40.

In step S211, the install unit 421 registers, in the install information management table 427, information included in each sales package saved in a temporary storage area and information included in each license file 90. That is, a product ID and a version recorded in a sales package information file included in a sales package are registered as the product ID and the version in the install information management table 427. Product IDs recorded in function package information files stored in function packages included in the sales package are registered as the product IDs of function packages in the install information management table 427. A value indicating that the sales package has been activated is recorded as the activation flag in the install information management table 427. An expiration date recorded in the license file 90 is registered as the license expiration date in the install information management table 427.

Next, the install unit 421 saves the license file 90 and the sales package saved in a temporary storage area in a predetermined storage location (folder), so that the sales package can be used (step S212).

The license file 90 is used for a license check performed by the license check unit 424 that is executed when activating a function package included in the sales package. The license check unit 424 allows activation of a function package if there is a license file 90 that corresponds to the sales package to which the function package that is the activation target belongs, if the device number in the license file 90 corresponds to the device number of the image forming apparatus 40 in which the function package is to be activated, and if the license file 90 has not expired. Otherwise, activation of the function package is not allowed. However, the license check performed by the license check unit 424 may be performed based on the component management table 155.

A fee is charged for the installed sales package based on, for example, information in the license management table 121 that is periodically acquired from the activation server unit 11 by the sales management unit 22 of the sales server 20. Specifically, when there is a record in the license management table 121 having a license issue date that is after the previous charging date, a fee is charged for the license corresponding to such a record.

As described above, according to the first embodiment, the user can easily perform a series of operations such as downloading, activating, and installing a sales package by following instructions on screen pages sequentially displayed on the image forming apparatus 40 according to the activation server unit 11 or the component server unit 15 of the license management server 10.

Furthermore, a dependency relationship relevant to the sales package selected as the install target is automatically verified, and the dependency package is also automatically included as an install target. Therefore, the user can feel safe to install a sales package without worrying about a complex dependency relationship of the sales package.

Furthermore, the manufacturer of the articles (manufacturer environment E2) can appropriately manage usage statuses of clients who are using the sales packages. Specifically, the manufacturer can recognize (manage) the types of sales packages being used and the types of corresponding licenses, for each of the image forming apparatus 40 (device numbers). Therefore, for example, when a bug is detected in a sales package or a sales package is upgraded, the image forming apparatus 40 using the particular sales package can be identified, and appropriate after-sales services can be provided.

Furthermore, the expiration date of a license is not determined when an article is purchased (when a purchase application is submitted to the sales server 20), but the expiration date is determined when the sales package is installed (i.e., when the license becomes effective). Therefore, the license can be handled in a flexible manner. That is, the user can install a sales package at a convenient time after purchasing an article. Even if the sales package is not immediately installed after being purchased, the license validity period is not reduced.

Next, a description is given of a license renewal process. When the license is a time-limited license, and an article corresponding to the time-limited license is continuously used, the user can extend the license validity period of the article by executing a license renewal process.

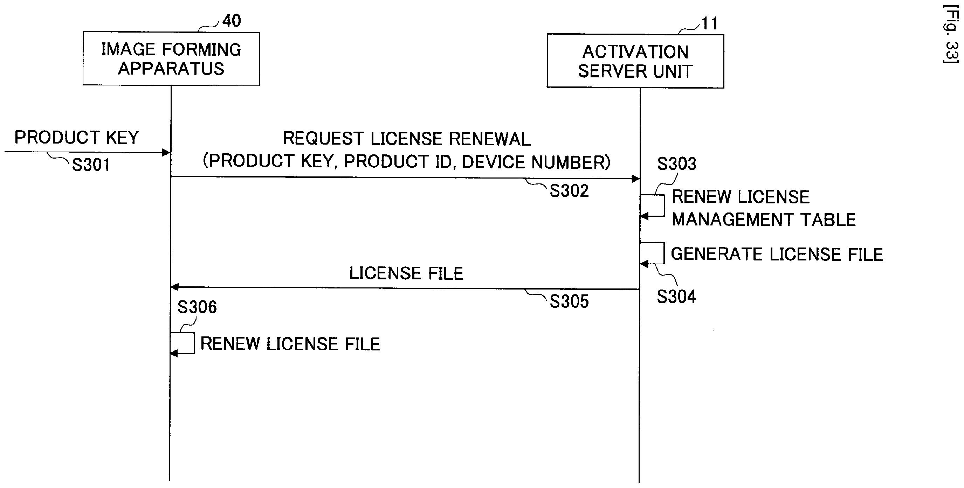

FIG. 33 is a sequence diagram for describing the license renewal process.

To renew a license, the function extension setting menu screen page 510 (see FIG. 19) is displayed on the operations panel 45, and the user selects an extended function management menu 513. In response to the selection of the extended function management menu 513, the UI control unit 426 causes the operations panel 45 to display an extended function management screen page.

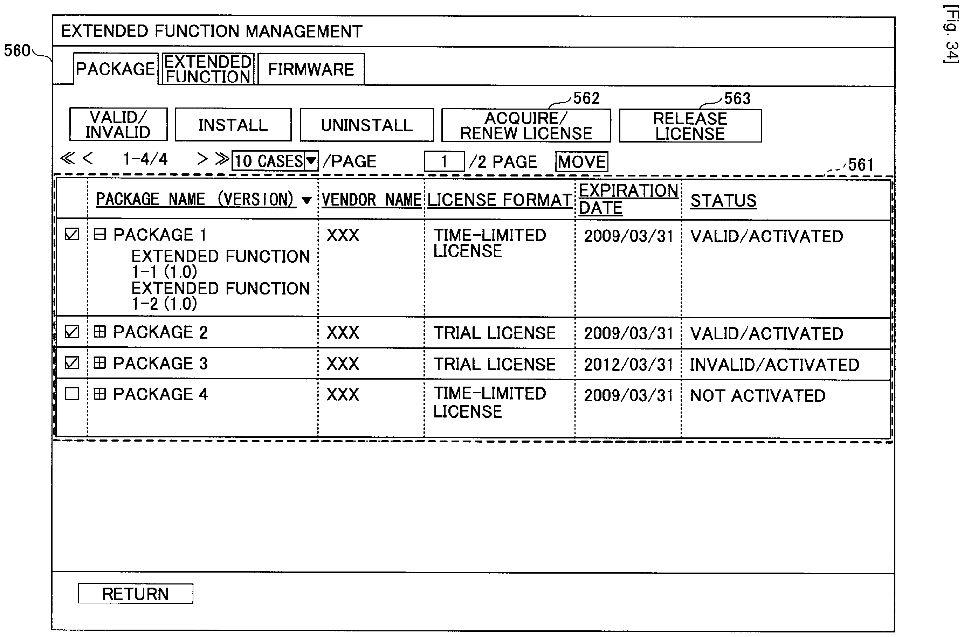

FIG. 34 illustrates an example of a displayed extended function management screen page. An extended function management screen page 560 includes a sales package list display region 561. In the sales package list display region 561, a list of sales packages installed in the image forming apparatus 40 is displayed. In the list, a tick box is provided for each sales package. When a user ticks a tick box of a sales package selected as a license renewal target, and a license acquisition/renewal button 562 is selected, the UI control unit 426 causes the operations panel 45 to display a license acquisition/renewal screen page.

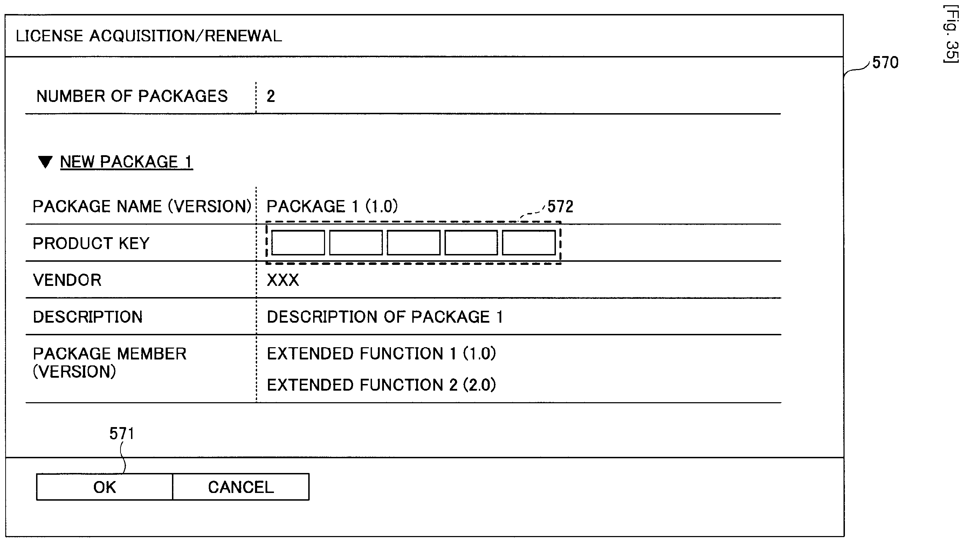

FIG. 35 illustrates an example of a displayed license acquisition/renewal screen page. A license acquisition/renewal screen page 570 includes a product key input field 572 for inputting a product key corresponding to the sales package ticked in the extended function management screen page 560. When the user inputs a product key in the product key input field 572 and an OK button 571 is selected (step S301), the license renewal unit 422 specifies the input product key, the product ID of the sales package selected as a license renewal target, and a device number of the image forming apparatus 40 recorded in the ROM 413 and the HDD 414, and sends a request to renew the license (a request to generate a new license file) to the license issuing unit 115 of the activation server unit 11 (step S302).

In response to the request to renew the license, the license issuing unit 115 executes an operation of renewing the license management table 121 (step S303). Specifically, if the record corresponding to the product key, the product ID, and the device number specified in the renewal request indicates a time-limited license as the license format, the license issuing unit 115 renews the license expiration date and the license issue date of the corresponding record. Furthermore, the license issuing unit 115 renews the status of the record to "check out" if the status is "check in". The new license expiration date is obtained by adding the license validity period of the record to the later date between the registered license expiration date and the present date (today). The new license issue date is the month/date/year of the present date. When plural product IDs are specified, licenses are renewed for plural records.

Next, the license issuing unit 115 generates the license file 90 (see FIG. 28) including a product ID, a device number, and an expiration date recorded in the corresponding record, for each record renewed in the license management table 121 (i.e., for each sales package selected as a renewal target) (step S304).

Next, the license issuing unit 115 returns the generated license file 90 to the license renewal unit 422 (step S305). The license renewal unit 422 deletes the existing license file 90 for the sales package selected as a license renewal target, and saves the received license file 90 in a predetermined storage region in the HDD 414 (step S306). The license renewal unit 422 renews the install information management table 427 based on the received license file 90. Specifically, the expiration date of the record corresponding to the product ID recorded in the license file 90 is renewed to the expiration date recorded in the received license file 90. The license renewal unit 422 sets the value of the activation flag in the record to indicate that the sales package has been activated.

By performing the above process, the user can use the same sales package until the new expiration date.

A fee for renewing the license is charged in the same manner as when the sales package is installed. That is, the sales management unit 22 of the sales server 20 charges the fee based on information in the license management table 121 periodically acquired by the activation server unit 11. Specifically, when there is a record in the license management table 121 having a license issue date that is after the previous charging date, a fee is charged for the license corresponding to such a record.

Next, a description is given of a process of renewing a sales package (sales package renewal process). If the license is valid, the user can renew the sales package to an upgraded version.

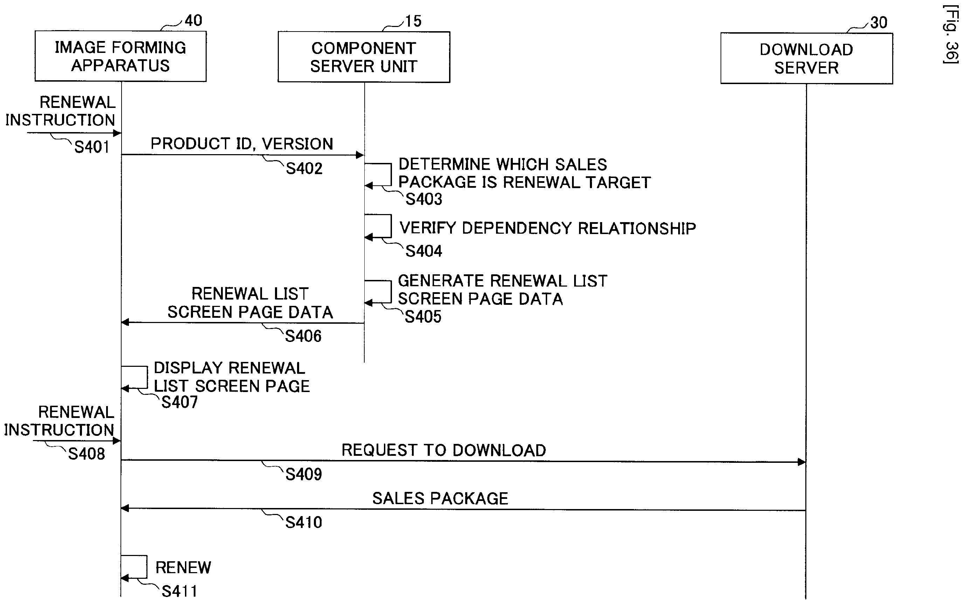

FIG. 36 is a sequence diagram for describing the sales package renewal process. The function extension setting menu screen page 510 is displayed on the operations panel 45, and the user selects a renewal menu 512 (step S401). The package renewal unit 423 specifies the product ID and the version of each sales package installed in the image forming apparatus 40, and sends a sales package renewal request to the package renewal support unit 153 of the component server unit 15 (step S402). The product ID and the version of each sales package can be acquired from the install information management table 427.

The package renewal support unit 153 determines which sales package is a renewal target (renewal target candidate) based on the program ID and version specified in the received renewal request (step S403). Specifically, the package renewal support unit 153 determines whether a sales package (product ID) of a newer version than the received version is registered in the component management table 155. When there is a sales package of a newer version than the received version registered in the component management table 155, the package renewal support unit 153 acknowledges such a sales package as a renewal target candidate.

Next, the package renewal support unit 153 causes the dependency relationship determination unit 151 to verify the dependency relationship of the sales package, which is a renewal target candidate (step S404). Even if the dependency relationship of the sales package had been verified at the time of installing the sales package, the dependency relationship is verified once again when at the time of renewing the sales package because the dependency relationship of the sales package may have changed as a result of the upgrade. The process of verifying the dependency relationship at step S404 is the same as the process performed when the sales package had been installed (see FIG. 29).

If there is no problem with the dependency relationship, the package renewal support unit 153 generates renewal list screen page data for displaying a screen page (renewal list screen page) used for selecting the sales package to be a renewal target from among the sales packages that are renewal target candidates (step S405). Next, the package renewal support unit 153 returns the generated renewal list screen page data to the package renewal unit 423 (step S406). When there is a problem with the dependency relationship, confirmation screen page data is generated for the sales packages that are renewal target candidates, which is the same as the confirmation screen page data generated when installing the sales packages. Then, the generated confirmation screen page data is returned to the package renewal unit 423.

Next, the package renewal unit 423 inputs the received renewal list screen page data in the UI control unit 426. The UI control unit 426 causes the operations panel 45 to display the renewal list screen page based on the renewal list screen page data (step S407).

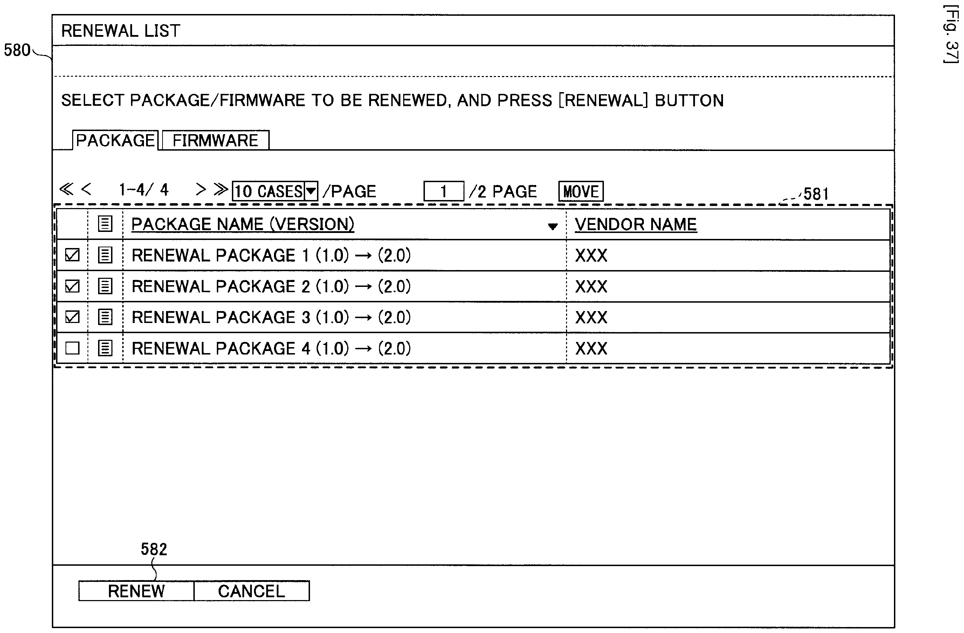

FIG. 37 illustrates an example of a displayed renewal list screen page. A renewal list screen page 580 includes a renewal package list display region 581. The renewal package list display region 581 displays a list of upgraded sales packages. In the list, a tick box is provided for each sales package.

When a user ticks a tick box of a sales package corresponding to the renewal target, and a renewal button 582 is selected (step S408), the package renewal unit 423 specifies a URL for each sales package selected as a renewal target, and sends a request to download the sales packages to the download process unit 31 of the download server 30 (step S409).

That is, a URL of each sales package that is a renewal target candidate is included in the renewal list screen page data. The renewal button 582 is associated with a transmission command of the download request specifying the URLs of the sales packages ticked (selected) in the renewal package list display region 581.

Next, the download process unit 31 acquires, from the sales package management unit 32, a sales package identified by the URL specified in the received download request, and transfers the sales package to the package renewal unit 423 (step S410). The package renewal unit 423 saves the received sales package in a predetermined storage area in the HDD 414 to renew the sales package of the old version. Furthermore, the package renewal unit 423 renews the install information management table 427 based on the product ID and version recorded in the sales package information file stored in the received sales package. Specifically, in the install information management table 427, the version corresponding to the product ID is renewed (step S411).

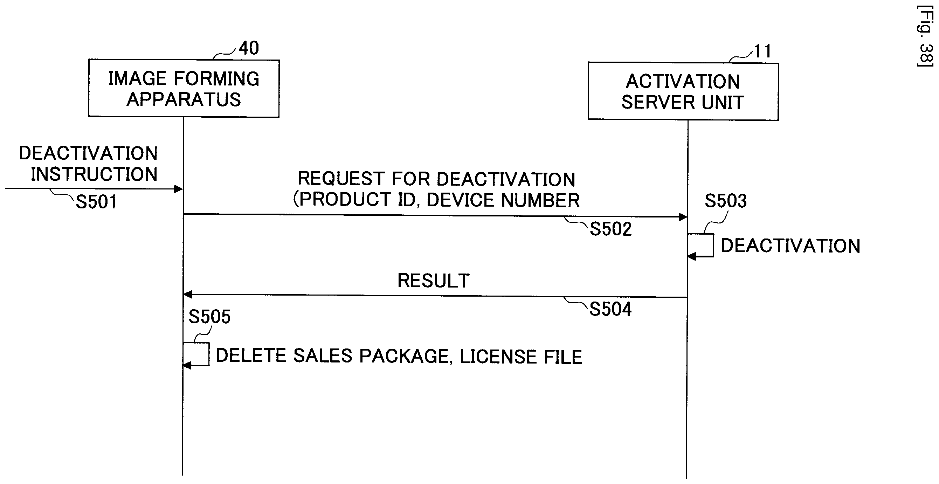

Next, a description is given of the deactivation process. FIG. 38 is a sequence diagram for describing the deactivation process.

In step S501, the deactivation unit 425 receives input of a deactivation instruction from a user (step S501). The deactivation instruction is input through the extended function management screen page 560 (see FIG. 34). That is, when the user ticks a sales package selected as a deactivation target in the sales package list display region 561 of the extended function management screen page 560 and selects a license release button 563, the deactivation unit 425 recognizes the ticked sales package as a deactivation target.

Next, the deactivation unit 425 specifies the product ID of the sales package selected as a deactivation target and the device number of the image forming apparatus 40, and sends a deactivation request (license release request) to the deactivation unit 116 of the activation server unit 11 (step S502). The deactivation unit 116 changes the status of the record corresponding to the specified product ID and device number from "check out" to "check in", in the license management table 121 (step S503). That is, information indicating that the license is not used is recorded. The deactivation process can be executed on a license whose status is "check out". Thus, if the status of a target record is not "check out", the deactivation unit 116 determines that the deactivation process is unsuccessful.

Next, the deactivation unit 116 returns a deactivation process result (whether the process is successful or unsuccessful) to the deactivation unit 425 of the image forming apparatus 40 (step S504). When the deactivation process is successful, the deactivation unit 425 deletes the sales package selected as the deactivation target and the license file 90 for the sales package from the HDD 414 (step S505). The deactivation unit 425 deletes the record corresponding to the sales package from the install information management table 427.

Accordingly, function packages included in the sales package cannot be used in the image forming apparatus 40. Meanwhile, the license of the sale package is released, and therefore the license can be used in another image forming apparatus 40 according to need, as long as the license has not expired. Thus, the deactivation process is particularly useful when the user wants to move a license of a sales package from a particular image forming apparatus 40 to another image forming apparatus 40 because the lease period of the particular image forming apparatus 40 has ended.

The deactivation process is automatically executed when the image forming apparatus 40 has detected an expired license.

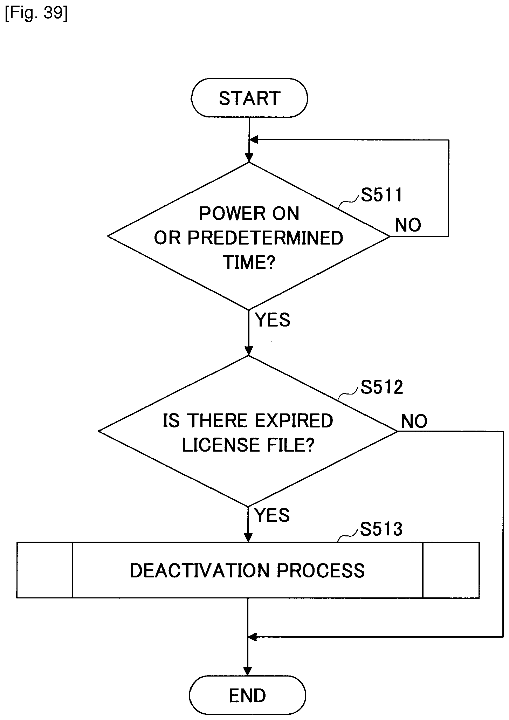

FIG. 39 is a flowchart of a process of automatically executing deactivation in the image forming apparatus 40.

For example, when the image forming apparatus 40 is activated, or at a predetermined time that is set in advance (YES in step S511), the deactivation unit 425 checks the expiration dates of all of the licenses saved in the HDD 414 of the image forming apparatus 40 (step S512). Specifically, the deactivation unit 425 compares the expiration dates of the license files 90 with the present date, and confirms whether there are any expired license files 90. When there is an expired license file 90 (YES in step S512), the deactivation unit 425 executes the deactivation process described with reference to FIG. 38 for the corresponding product ID (sales package) recorded in the license file 90 (step S513).

As described above, according to the first embodiment, the user can easily perform operations for executing the process of renewing a license, the process of renewing a sales package, and a deactivation process, by following instructions on screen pages displayed on the image forming apparatus 40.

Furthermore, the sales package entity and the license are distinctly separated, and therefore operations can be performed flexibly, such as renewing only the license or renewing (upgrading) only the sales package.

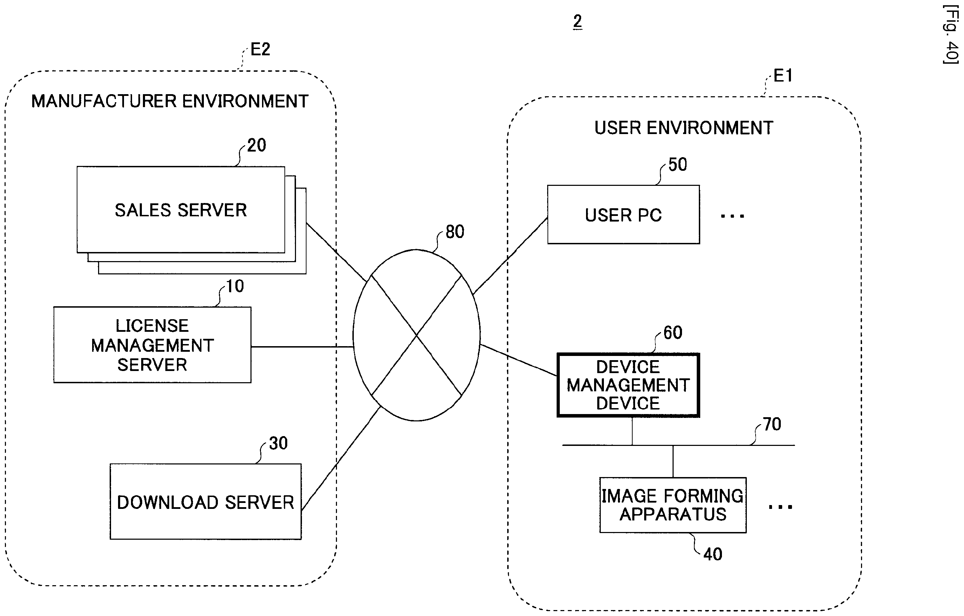

Next, a description is given of a second embodiment of the present invention. FIG. 40 illustrates a configuration of a device management system 2 according to the second embodiment of the present invention. In FIG. 40, elements corresponding to those in FIG. 1 are denoted by the same reference numerals, and are not further described.

As shown in FIG. 40, a device management device 60 is added to the user environment E1. The device management device 60 is a computer such as a PC (Personal Computer) for collectively acquiring and installing components to be operated in the image forming apparatus 40 and the licenses (usage rights) for the components. The hardware configuration of the device management device 60 may be the same as that shown in FIG. 6. However, the device management device 60 is provided with a display device such as a liquid crystal display and an input device such as a keyboard and a mouse. The device management device 60 is connected to the image forming apparatus 40 via a network 70 (wired or wireless) such as a LAN (Local Area Network). The user PC 50 may also be connected to the network 70. The user PC 50 may serve as the device management device 60.

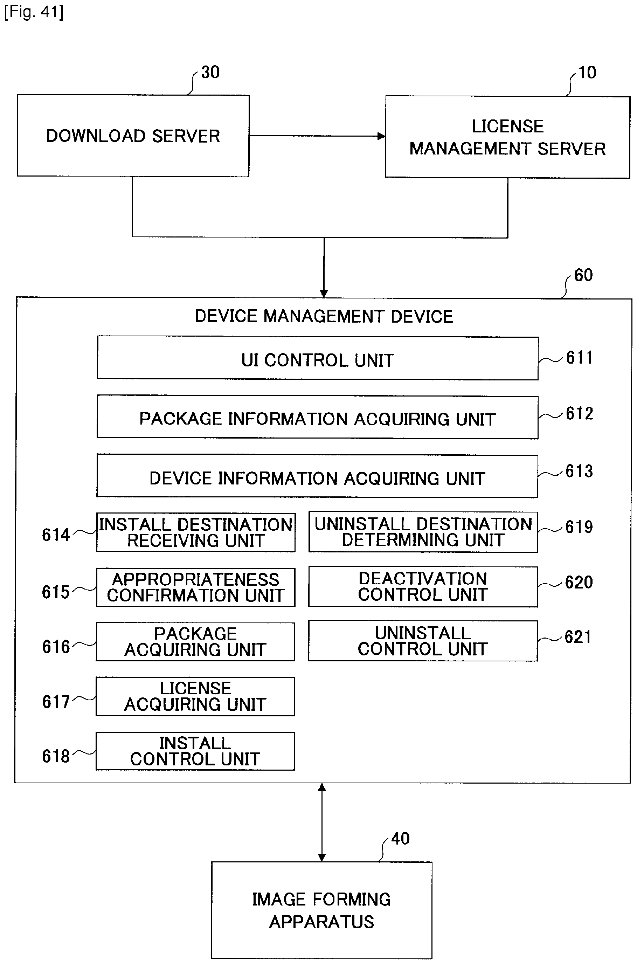

FIG. 41 is a functional block diagram of the device management device 60 according to the second embodiment.

As shown in FIG. 41, the device management device 60 includes a UI control unit 611, a package information acquiring unit 612, a device information acquiring unit 613, an install destination receiving unit 614, an appropriateness confirmation unit 615, a package acquiring unit 616, a license acquiring unit 617, an install control unit 618, an uninstall destination determining unit 619, a deactivation control unit 620, and an uninstall control unit 621. These units are implemented when a program installed in the device management device 60 causes the CPU of the device management device 60 to execute processes.

The UI control unit 611 receives an instruction from the user (an instruction to install or uninstall a sales package). The package information acquiring unit 612 acquires, from the license management server 10, configuration information of a sales package selected as a target to install or uninstall. The device information acquiring unit 613 acquires device information from the image forming apparatus 40. The device information includes information pertaining to sales packages and firmware installed in the image forming apparatus 40. The install destination receiving unit 614 receives an indication of the image forming apparatus 40 that is specified by a user as the install destination of a sales package. The appropriateness confirmation unit 615 causes the dependency relationship determination unit 151 of the license management server 10 to verify the appropriateness of installing the sales package selected as the install target in the image forming apparatus 40 selected as the install destination.

The package acquiring unit 616 downloads (acquires) a sales package that is an install target from the download server 30. The license acquiring unit 617 acquires the license file 90 of the sales package that is the install target from the license management server 10. The install control unit 618 sends the sales package and the license file 90 to the image forming apparatus 40.

The uninstall destination determining unit 619 determines which image forming apparatus 40 has the sales package selected as the uninstall target installed. The deactivation control unit 620 sends a request to delete the license file 90 to the image forming apparatus 40, and sends a request to release the license corresponding to the license file 90. The uninstall control unit 621 sends a request to the image forming apparatus 40 to uninstall the sales package.

The other devices in the device management system 2, such as the license management server 10, the download server 30, and the image forming apparatus 40, may have the same functional configurations as those of the first embodiment.

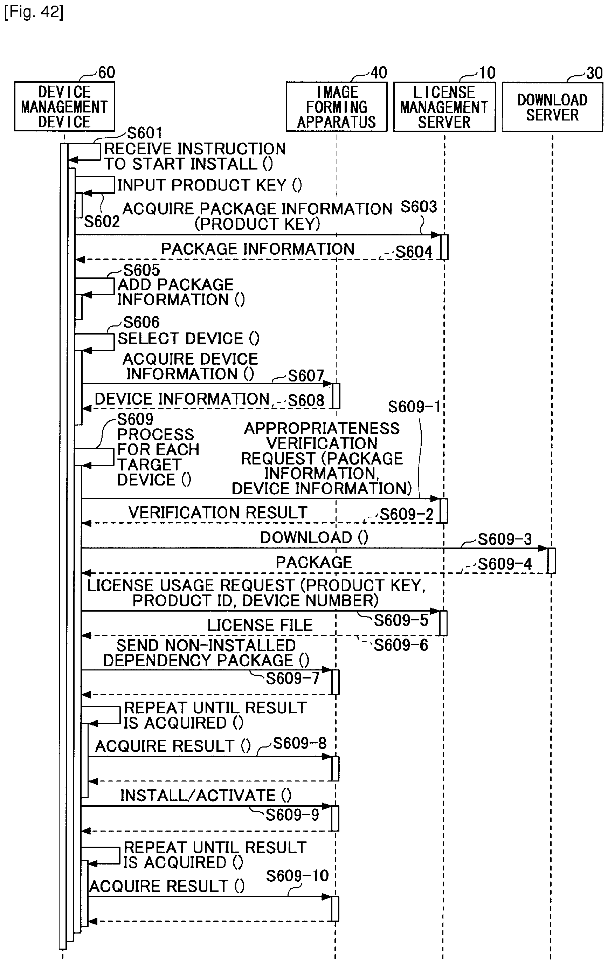

A description is given of a process performed by the device management system 2. FIG. 42 is a sequence diagram for describing a process of installing and activating a sales package according to the second embodiment. In FIG. 42, it is assumed that the user of the image forming apparatus 40 has purchased an article corresponding to a sales package, and has obtained the product key of the article. The method of purchasing an article and the method of obtaining a product key may be the same as those of the first embodiment. In FIG. 42, the device management device 60 is the operation target.

When an instruction to start installing the sales package is input to the initial screen page displayed on a display device of the device management device 60, the UI control unit 611 of the device management device 60 causes the display device to display a product key input screen page (step S601). When the product key of the sales package that is the install target (hereinafter, "current sales package") is input to the product key input screen page by the user (step S602), the package information acquiring unit 612 specifies the input product key and sends a request to acquire package information of the product key to the install support unit 152 of the license management server 10 (step S603).

In response to receiving a request to acquire package information, the install support unit 152 of the license management server 10 causes the product key verification unit 113 to execute a process of confirming the validity of the product key by the same process as steps S153 through S155 in FIG. 18.

When the product key verification unit 113 determines that the product key is valid, the install support unit 152 acquires information registered for the received product key from the component management table 155 (see FIG. 22), and returns the acquired information as package information to the package information acquiring unit 612 (step S604). Thus, the package information includes a product ID that is associated to at least the product key (i.e., the product ID of the current sales package). Furthermore, when the product key is for a group license or a volume license, information of plural product IDs (plural records) is included in the package information.

When the package information is received by the package information acquiring unit 612, the UI control unit 611 of the device management device 60 causes the display device to display a screen page (confirmation screen page) including the received package information to prompt the user to confirm the contents of the current sales package and the contents of the license (step S605).

When the user has input an instruction to continue the installing operation (for example, when the OK button in the confirmation screen page has been pressed), the install destination receiving unit 614 causes the display device to display a device selection screen page including a list of the image forming apparatuses 40 to prompt the user to select one of the image forming apparatuses 40 in which the current sales package is to be installed (step S606). In the device selection screen page, plural image forming apparatuses 40 may be selected. The device selection screen page displays the image forming apparatuses 40 whose IP addresses and host names are stored in the storage device in advance. The device information acquiring unit 613 may dynamically search for the image forming apparatuses 40 that are connected to the network 70 by issuing a broadcast operation in the network 70, and display the host names of the search-found image forming apparatuses 40 on the device selection screen page.

Next, the device information acquiring unit 613 sends a request to acquire device information to each image forming apparatus 40 selected in the device selection screen page (step S607). The install unit 421 of each image forming apparatus 40 that has received the request to acquire device information acquires information recorded in the install information management table 427 (see FIG. 24), and returns device information including the acquired information and the information including the device number of the corresponding image forming apparatus 40 to the device information acquiring unit 613 (step S608).

Next, step S609 is a loop process that is executed for each image forming apparatus 40 whose device information has been acquired (selected in the device selection screen page). The image forming apparatus 40 that is the process target of the loop process is hereinafter referred to as a "current device".

In step S609-1, the appropriateness confirmation unit 615 sends, to the license management server 10, an appropriateness verification request including device information of the current device and package information acquired by the package information acquiring unit 612. In this case, "appropriateness" means the appropriateness of installing the function package included in the current sales package in the current device. In response to receiving the appropriateness verification request, the dependency relationship determination unit 151 of the license management server 10 verifies the dependency relationship of the current sales package by performing the same process as that described with reference to FIG. 29. When there is no problem in the dependency relationship, the verification result of the dependency relationship determination unit 151 is "appropriate". When there is a problem in the dependency relationship, the verification result of the dependency relationship determination unit 151 is "not appropriate".

Next, the dependency relationship determination unit 151 returns the verification result of appropriateness to the appropriateness confirmation unit 615 (step S609-2). When the verification result is "appropriate", and the dependency package is not installed in the current device, the verification result will include information recorded in the component management table 155 regarding the dependency package (hereinafter, "non-installed dependency package"). The information corresponds to an instruction to acquire the non-installed dependency package.

When a verification result indicating "appropriate" is received, the package acquiring unit 616 sends a request to download the current sales package to the download server 30, based on a download path (URL) included in the package information of the current sales package (step S609-3). In response to the download request, the download process unit 31 acquires, from the sales package management unit 32, the sales package identified by the URL specified in the download request, and returns the sales package (step S609-4). When there are plural current sales packages, the downloading operation (step S609-3 and step S609-4) is performed plural times. When a verification result including package information of a non-installed dependency package is received in step S609-2, the non-installed dependency package is also downloaded at step S609-3 and step S609-4. For example, it is determined that there are plural current packages when the product key input at step S602 corresponds to a group license, or when plural product keys are input.

Next, the license acquiring unit 617 specifies the product key input at step S602, the product ID of the current sales package, and the device number of the current device, and sends a license usage request to the license management server 10 (step S609-5).

The license issuing unit 115 of the license management server 10 generates the license file 90 by executing the same process as that shown in FIG. 31, and returns the generated license file 90 to the license acquiring unit 617 (step S609-6).

The license acquiring unit 617 executes step S609-5 when the package acquiring unit 616 has successfully acquired (downloaded) the sales package. That is, when a sales package has not been successfully acquired, the license acquiring unit 617 does not acquire the license file 90. If a sales package is not acquired, it is impossible to install a sales package. Therefore, if the license file 90 for a sales package is acquired when the sales package is not acquired, a license for a sales package that is not actually used becomes effective, which may incur unreasonable losses to the user.

Next, when the non-installed dependency package is acquired at step S609-4, the install control unit 618 sends the non-installed dependency package to the current device, and sends a request to the current device to install the non-installed dependency package (step S609-7). The install unit 421 of the current device installs the non-installed dependency package, and records information (product ID, etc.) of the non-installed dependency package in the install information management table 427.

Next, the install control unit 618 polls the current device for the non-installed dependency package install result (result indicating that the non-installed dependency package has been installed) (step S609-8). The polling is repeated until the installing process in the current device ends and an install result is returned.

The non-installed dependency package is installed first (before installing the current sales package) to prevent an error in the installing process of the current sales package, which may be caused when the component on which the current sales package depends is not installed.

Next, the install control unit 618 sends a sales package (current sales package) acquired at step S609-4 and the license file 90 acquired at step S609-6 to the current device, and sends a request to the current device to install and activate the sales package (step S609-9). The install unit 421 of the current device executes the process described with reference to FIG. 18 for the received sales package and the license file 90. As a result, the sales package can be used in the current device.

Next, the install control unit 618 polls the current device for the sales package install result (result indicating that the sales package has been installed) (step S609-10). The polling is repeated until the installing process in the current device ends and an install result is returned.

Next, a description is given of a process of uninstalling and deactivating a sales package (releasing the license).

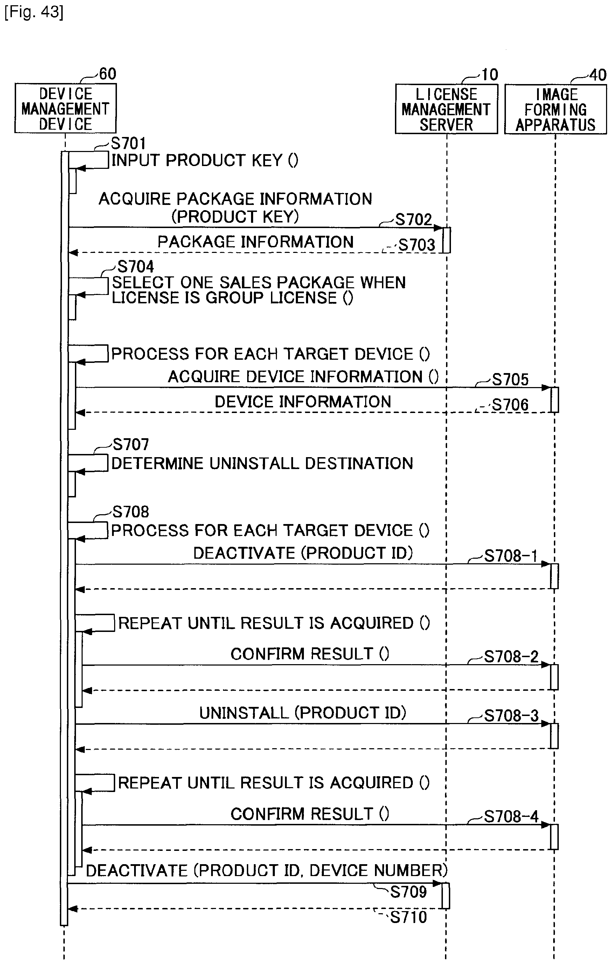

FIG. 43 is a sequence diagram for describing the process of uninstalling and deactivating a sales package according to the second embodiment.

In step S701, the UI control unit 611 of the device management device 60 receives a product key corresponding to an uninstall target that is input by the user at an uninstall screen page displayed by the display device. Next, the package information acquiring unit 612 specifies the input product key and sends a request to acquire package information of the product key to the license management server 10 (step S702).

Next, the component management unit 154 of the license management server 10 executes the same process as the process executed at step S603 in FIG. 42, and returns package information of the sales package corresponding to the received product key to the package information acquiring unit 612 (step S703). If the product key corresponds to a group license, package information of plural sales packages is returned.

When the product key corresponds to a group license, i.e., package information of plural sales packages is received, the UI control unit 611 causes the display device to display a sales package selection screen page including list information of the sales packages, and prompts the user to select a sales package as an uninstall target (step S704). Hereinafter, the selected sales package is referred to as a "current sales package".

Next, the device information acquiring unit 613 sends a request to acquire device information to each of the image forming apparatuses 40 (step S705). In response to the request to acquire device information, the deactivation unit 425 of the image forming apparatus 40 acquires information recorded in the install information management table 427, and returns, to the device information acquiring unit 613, device information including the acquired information and the device number of the corresponding image forming apparatus 40 (step S706).

Next, the uninstall destination determining unit 619 cross-checks the package information acquired at step S703 with the device information acquired from the image forming apparatus 40 at step S706, and identifies the image forming apparatus 40 in which the sales package corresponding to the package information is installed (step S707). Specifically, the image forming apparatus 40 corresponding to device information including the product ID included in the package information (product ID of sales package) is determined as being the image forming apparatus 40 in which the sales package is installed (i.e., the image forming apparatus 40 that is the uninstall destination of the sales package).

Next, step S708 is a loop process that is executed for each image forming apparatuses 40 that is an uninstall destination of the sales package. The image forming apparatus 40 that is the process target of the loop process is hereinafter referred to as a "current device".

In step S708-1, the deactivation control unit 620 specifies a product ID of the current sales package, and sends a deactivation request (a request to delete the license file 90) to the current device. In response to the request, the deactivation unit 425 deletes the license file 90 corresponding to the specified product ID.

Next, the deactivation control unit 620 polls the current device for the license file 90 deletion process result (result indicating that the license file 90 has been deleted) (step S708-2). The polling is repeated until the deleting process of the license file 90 in the current device ends and a deletion process result is returned.

Next, the uninstall control unit 621 specifies the product ID of the current sales package, and sends an uninstall request (request to delete the sales package) to the current device (step S708-3). The license check unit 424 of the current device uninstalls (deletes) the sales package corresponding to the specified product ID.

Next, the deactivation control unit 620 polls the current device for the current sales package uninstall result (result indicating that the current sales package has been uninstalled) (step S708-4). The polling is repeated until the uninstalling process in the current device ends and an uninstall result is returned.

When step S708 has been performed for all of the image forming apparatuses 40 that are targets for uninstalling sales packages, the deactivation control unit 620 specifies the product ID of the current sales package and the device numbers of all of the image forming apparatuses 40, and sends a deactivation request (to make the license available) to the deactivation unit 116 of the license management server 10 (step S709). The deactivation unit 116 performs the process as described in step S503 in FIG. 38. As a result, the status of the license corresponding to the specified product ID and device number is changed to "check in". Next, the deactivation unit 116 returns the deactivation process result (whether the process is successful or unsuccessful) to the deactivation control unit 620 of the device management device 60 (step S710).

As described above, the device management device 60 according to the second embodiment can collectively install and activate sales packages (start usage of license) in plural image forming apparatuses 40. Therefore, particularly in a case where the user environment E1 includes many image forming apparatuses 40, the workload on the user is can be significantly reduced.

In the present embodiment, the image forming apparatus 40 is taken as an example of the device; however, applications of the present embodiment are not limited to the image forming apparatus 40. The present invention may be effectively applied to any device as long as programs can be added (installed).

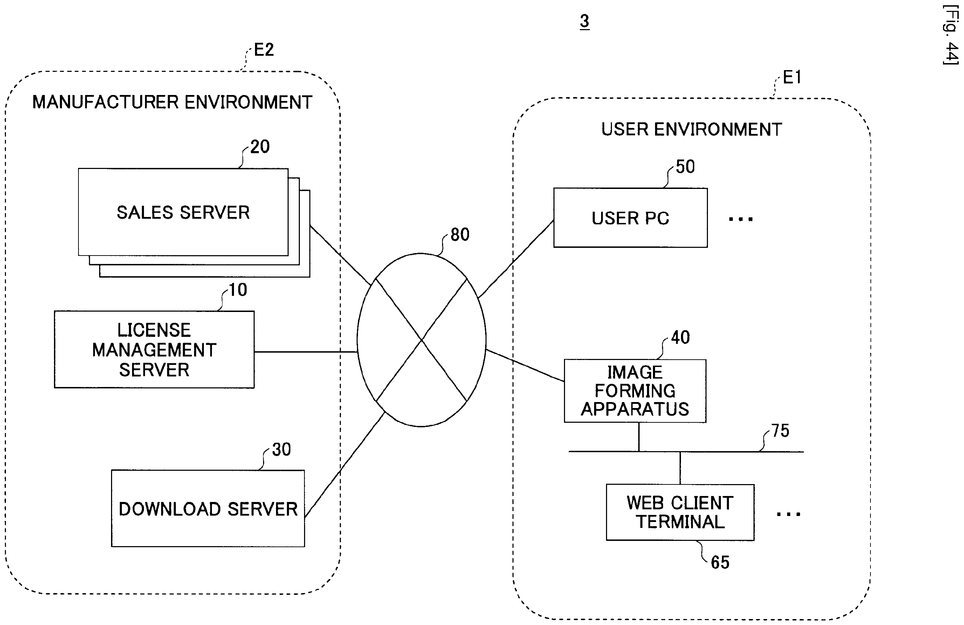

Next, a description is given of a third embodiment of the present invention. FIG. 44 illustrates a configuration of a device management system 3 according to the third embodiment. In FIG. 44, elements corresponding to those in FIG. 1 are denoted by the same reference numerals, and are not further described.

In the user environment E1 illustrated in FIG. 44, a web client terminal 65 is added. The web client terminal 65 is a computer or an electronic device such as a PC (Personal Computer), including a web browser. The hardware configuration of the web client terminal 65 may be the same as that illustrated in FIG. 6. However, the web client terminal 65 includes a display device such as a liquid crystal display and an input device such as a keyboard and a mouse. The web client terminal 65 is connected to the image forming apparatus 40 via a network 75 such as a LAN (Local Area Network) (wired or wireless). The user PC 50 may serve as the web client terminal 65.

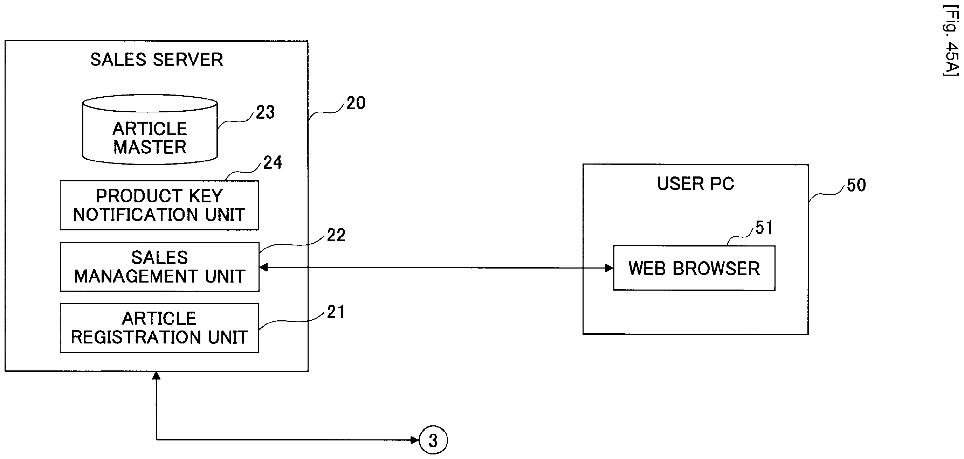

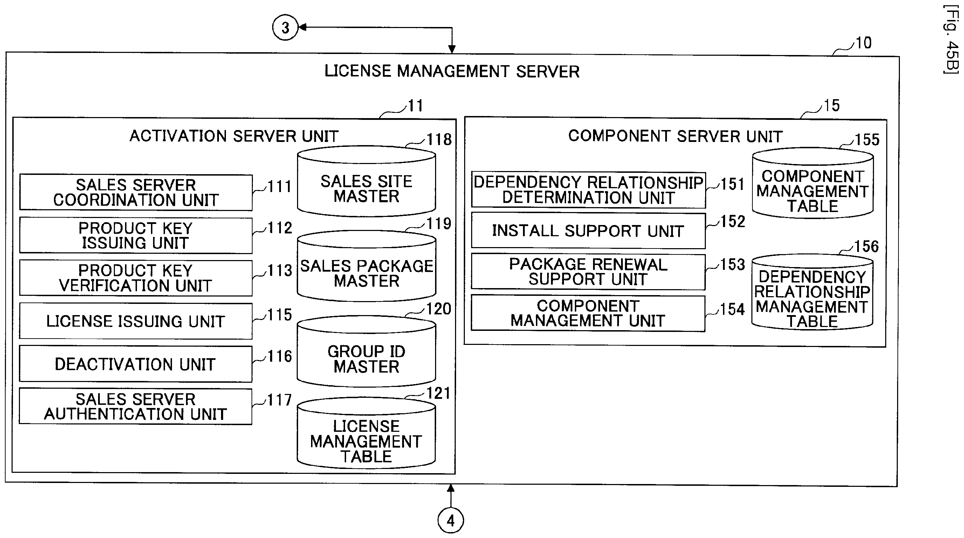

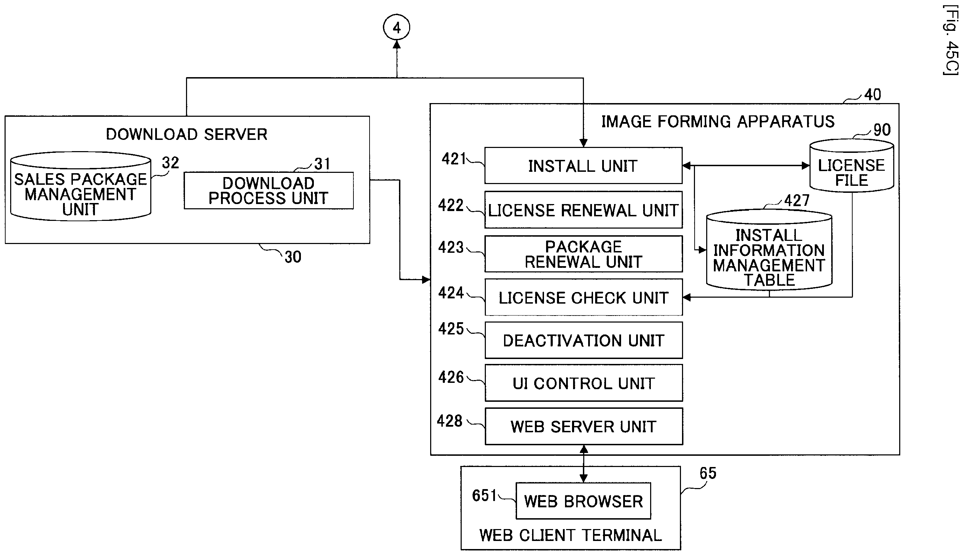

FIGS. 45A through 45C illustrate a functional block diagram of the device management system 3 according to the third embodiment. In FIGS. 45A through 45C, elements corresponding to those in FIGS. 5A through 5C are denoted by the same reference numerals, and are not further described.

As shown in FIGS. 45A through 45C, the image forming apparatus 40 includes a web server unit 428. The web server unit 428 performs a process of displaying, on the web client terminal 65, a screen page displayed on the operations panel 45 of the UI control unit 426 according to the first embodiment. Specifically, the web server unit 428 sends HTML data of various screen pages to the web client terminal 65.

Meanwhile, the web client terminal 65 includes a web browser 651. The web browser 651 receives HTML data sent from the web server unit 428, and causes a display device of the web browser 651 to display various screen pages based on the HTML data.

That is, with the device management system 3 according to the third embodiment, the user can perform the operation of the first embodiment by remote control with the use of the web client terminal 65, instead of using the operations panel 45 as in the first embodiment. Specifically, the user can input the instructions at steps S151, S159, and S165 of the sequence in FIG. 18 from a screen page displayed by the web browser 651. Thus, in the third embodiment, the web server unit 428 corresponds to an example of an input unit for receiving input of a license key.

In the above described embodiments, the license management server 10, the sales server 20, and the download server 30 are separate devices. However, the license management server 10 may include at least one of the sales server 20 and the download server 30.

The present invention is not limited to the specifically disclosed embodiment, and variations and modifications may be made without departing from the scope of the present invention.

The present application is based on Japanese Priority Applications No. 2009-030066 filed on February 12, 2009 and No. 2009-238977 filed on October 16, 2009 with the Japan Patent Office.

## Claims

1. A license management apparatus comprising:
a license identifier issuing unit (112) configured to generate and issue a license identifier and license information, the license identifier being associated with a product identifier of at least one purchased program among programs, and the license identifier being related with the license information for the at least one purchased program;
a storing unit configured to store the license identifier in a license information storing unit (121);
a determining unit (113) configured to receive one of the license identifiers via a network, and to determine whether the one of the license identifiers is stored in the license information storing unit (121); and
a sending unit (115) configured to send via a network instruction information to acquire the at least one purchased program corresponding to the product identifier associated with the one of the license identifiers, or an entity of the at least one purchased program corresponding to the product identifier associated with the one of the license identifiers, and to also send via a network (80) a license file configured to allow usage of the at least one purchased program corresponding to the product identifier associated with the one of the license identifiers, in the case that the one of the license identifiers is stored in the license information storing unit (121), and further comprising:
a dependency information storing unit (156) configured to store dependency information indicating a dependency relationship between plural of the programs;
a dependency relationship determining unit (151) configured to determine, in the case that the one of the license identifiers is stored in the license information storing unit (121), whether a device (40), which is an install destination of the at least one purchased program corresponding to the product identifier associated with the one of the license identifiers, includes a dependency program on which the at least one purchased program corresponding to the product identifier associated with the one of the license identifiers depends, wherein the dependency relationship determining unit (151) makes the determination based on one or more of the product identifiers received via a network (80) corresponding to one or more of the programs included in the device (40) and also based on the dependency information storing unit (156); and
an acquisition instruction sending unit (152; 153) configured to return via a network (80) a program acquisition instruction including identification information indicating an acquiring position of the at least one purchased program corresponding to the product identifier associated with the one of the license identifiers and an acquiring position of the dependency program on which the at least one purchased program corresponding to the product identifier associated with the one of the license identifiers depends, when the device (40) is determined as not including the dependency program on which the at least one purchased program corresponding to the product identifier associated with the one of the license identifiers depends.

2. The license management apparatus according to claim 1, wherein
the acquisition instruction sending unit (152; 153) returns the program acquisition instruction including the identification information indicating the acquiring position of the at least one purchased program corresponding to the product identifier associated with the one of the license identifiers, when the device is determined as including the dependency program.

3. The license management apparatus according to claim 1 or 2, further comprising:
a license usability determining unit (113) configured to receive via a network (80) a license usage request including a device identifier unique to the device and also including the one of the license identifiers, and to determine whether usage of a license corresponding to the one of the license identifiers is possible based on whether record information indicating that the license corresponding to the one of the license identifiers is stored in the license information storing unit (121);
a license information recording unit (115) configured to store, in the license information storing unit (121), usage information indicating that the license corresponding to the one of the license identifiers is used, in association with the one of the license identifiers, when usage of the license corresponding to the one of the license identifiers is determined as being possible; and
a license file generating unit (115) configured to generate a license file (90) including the product identifier associated with the one of the license identifiers and also including the device identifier, and return the license file via a network (80), wherein the license file (90) allows usage of the at least one purchased program corresponding to the product identifier associated with the one of the license identifiers, in the device (40) corresponding to the device identifier.

4. The license management apparatus according to claim 3, wherein
the license information recording unit (115) stores, in the license information storing unit (121), the device identifier in association with the one of the license identifiers, when usage of the license corresponding to the one of the license identifiers is determined as being possible.

5. The license management apparatus according to claim 3 or 4, further comprising:
a license releasing unit (116) configured to store, in the license information storing unit (121), non-usage information indicating that the license corresponding to the one of the license identifiers is not used, in association with the one of the license identifiers, when a license release request including the one of the license identifiers and the device identifier is received.

6. The license management apparatus according to claim 3, 4 or 5, wherein
the license identifier issuing unit (112) stores a number of purchased licenses received together with the product identifier associated with the one of the license identifiers of the at least one purchased program, in the license information storing unit (121) in association with the one of the license identifiers;
the license usability determining unit (113) determines whether usage of the license corresponding to the one of the license identifiers is possible based on a number of used licenses among the number of purchased licenses corresponding to the one of the license identifiers; and
the license information recording unit (115) stores number information indicating the number of used licenses corresponding to the one of the license identifiers, in the license information storing unit (121) in association with the one of the license identifiers.

7. The license management apparatus according to any one preceding claim, further comprising:
a dependency information acquiring unit (154) configured to acquire dependency destination information of each of the programs, wherein each of the programs includes the dependency destination information indicating the dependency program on which the corresponding program depends, wherein the dependency destination information is acquired from a program management device (30), which includes the programs and which is where the programs are acquired from; and
a dependency information registering unit (156) configured to store the dependency information indicating the dependency relationship between the programs in the dependency information storing unit (156) based on the acquired dependency destination information.

8. A license management method executed by a computer, the license management method comprising:
a license identifier issuing step of generating and issuing a license identifier and license information, the license identifier being associated with a product identifier of at least one purchased program among programs, and the license identifier being related with the license information for the at least one purchased program;
a storing step of storing the license identifier in a license information storing unit (121);
a determining step of receiving one of the license identifiers via a network (80), and determining whether the one of the license identifiers is stored in the license information storing unit (121); and
a sending step of sending via a network (80) instruction information to acquire the at least one purchased program corresponding to the product identifier associated with the one of the license identifiers, or an entity of the at least one purchased program corresponding to the product identifier associated with the one of the license identifiers, and of also sending via a network (80) a license file (90) configured to allow usage of the at least one purchased program corresponding to the product identifier associated with the one of the license identifiers, in the case that the one of the license identifiers is stored in the license information storing unit (121), and further comprising:
a dependency relationship determining step of determining, in the case that the one of the license identifiers is stored in the license information storing unit (121), whether a device (40), which is an install destination of the at least one purchased program corresponding to the product identifier associated with the one of the license identifiers, includes a dependency program on which the at least one purchased program corresponding to the product identifier associated with the one of the license identifiers depends, wherein the determination at the dependency relationship determining step is made based on one or more of the product identifiers received via a network (80) corresponding to one or more of the programs included in the device (40) and also based on a dependency information storing unit (156) storing dependency information indicating a dependency relationship between plural of the programs; and
an acquisition instruction sending step of returning via a network (80) a program acquisition instruction including identification information indicating an acquiring position of the at least one purchased program corresponding to the product identifier associated with the one of the license identifiers and an acquiring position of the dependency program on which the at least one purchased program corresponding to the product identifier associated with the one of the license identifiers depends, when the device (40) is determined as not including the dependency program on which the at least one purchased program corresponding to the product identifier associated with the one of the license identifiers depends.

9. The license management method according to claim 8, wherein
the acquisition instruction sending step includes a step of returning the program acquisition instruction including the identification information indicating the acquiring position of the at least one purchased program corresponding to the product identifier associated with the one of the license identifiers, when the device (40) is determined as including the dependency program.

10. The license management method according to claim 8 or 9, further comprising:
a license usability determining step of receiving via a network (80) a license usage request including a device identifier unique to the device (40) and also including the one of the license identifiers, and determining whether usage of a license corresponding to the one of the license identifiers is possible based on whether record information indicating that the license corresponding to the one of the license identifiers is stored in the license information storing unit (121);
a license information recording step of storing, in the license information storing unit (121), usage information indicating that the license corresponding to the one of the license identifiers is used, in association with the one of the license identifiers, when usage of the license corresponding to the one of the license identifiers is determined as being possible; and
a license file generating step of generating a license file including the product identifier associated with the one of the license identifiers and also including the device identifier, and returning the license file via a network (80), wherein the license file allows usage of the at least one purchased program corresponding to the product identifier associated with the one of the license identifiers, in the device (40) corresponding to the device identifier.

11. The license management method according to claim 10, wherein
the license information recording step includes a step of storing, in the license information storing unit (121), the device identifier in association with the one of the license identifiers, when usage of the license corresponding to the one of the license identifiers is determined as being possible.

12. The license management method according to claim 10 or 11, further comprising:
a license releasing step of storing, in the license information storing unit (121), non-usage information indicating that the license corresponding to the one of the license identifiers is not used, in association with the one of the license identifiers, when a license release request including the one of the license identifiers and the device identifier is received.

## Patentansprüche

1. Lizenzverwaltungsvorrichtung, umfassend:
eine Lizenzkennzeichenausgabeeinheit (112), die konfiguriert ist, um ein Lizenzkennzeichen und Lizenzinformationen zu generieren und auszugeben, wobei das Lizenzkennzeichen einem Produktkennzeichen von mindestens einem gekauften Programm unter Programmen zugeordnet ist und das Lizenzkennzeichen mit den Lizenzinformationen für das mindestens eine gekaufte Programm in Zusammenhang steht;
eine Speichereinheit, die konfiguriert ist, um das Lizenzkennzeichen in einer Lizenzinformationsspeichereinheit (121) zu speichern;
eine Bestimmungseinheit (113), die konfiguriert ist, um eines der Lizenzkennzeichen über ein Netzwerk zu empfangen und zu bestimmen, ob das eine der Lizenzkennzeichen in der Lizenzinformationsspeichereinheit (121) gespeichert ist; und
eine Sendeeinheit (115), die konfiguriert ist, um über ein Netzwerk Anweisungsinformationen zu senden, um das mindestens eine gekaufte Programm, das dem Produktkennzeichen entspricht, das dem einen der Lizenzkennzeichen zugeordnet ist, oder eine Entität des mindestens einen gekauften Programms, das dem Produktkennzeichen entspricht, das dem einen der Lizenzkennzeichen zugeordnet ist, zu erwerben, und auch, um über ein Netzwerk (80) einer Lizenzdatei zu senden, die konfiguriert ist, um eine Nutzung des mindestens einen gekauften Programms zu gestatten, das dem Produktkennzeichen entspricht, das dem einen der Lizenzkennzeichen zugeordnet ist, in dem Fall, dass das eine der Lizenzkennzeichen in der Lizenzinformationsspeichereinheit (121) gespeichert ist, und ferner umfassend:
eine Abhängigkeitsinformationsspeichereinheit (156), die konfiguriert ist, um Abhängigkeitsinformationen zu speichern, die eine Abhängigkeitsbeziehung zwischen mehreren der Programme angeben;
einen Abhängigkeitsbeziehungsbestimmungseinheit (151), die konfiguriert ist, um in dem Fall, dass das eine der Lizenzkennzeichen in der Lizenzinformationsspeichereinheit (121) gespeichert ist, zu bestimmen, ob eine Einrichtung (40), die ein Installationszielort des mindestens einen gekauften Programms ist, das dem Produktkennzeichen entspricht, das dem einen der Lizenzkennzeichen zugeordnet ist, ein Abhängigkeitsprogramm umfasst, von dem das mindestens eine gekaufte Programm, das dem Produktkennzeichen entspricht, das dem einen der Lizenzkennzeichen zugeordnet ist, abhängt, wobei die Abhängigkeitsbeziehungsbestimmungseinheit (151) die Bestimmung basierend auf einem oder mehreren der Produktkennzeichen, die über ein Netzwerk (80) empfangen werden und die einem oder mehreren der Programme, die in der Einrichtung (40) inbegriffen sind, entsprechen, und auch basierend auf der Abhängigkeitsinformationsspeichereinheit (156) trifft; und
eine Erwerbsanweisungssendeeinheit (152; 153), die konfiguriert ist, um über ein Netzwerk (80) eine Programmerwerbsanweisung einschließlich Kennzeichnungsinformationen zurückzuschicken, die eine Erwerbsposition des mindestens einen gekauften Programms, das dem Produktkennzeichen entspricht, das dem einen der Lizenzkennzeichen zugeordnet ist, und eine Erwerbsposition des Abhängigkeitsprogramms, von dem das mindestens eine gekaufte Programm, das dem Produktkennzeichen entspricht, das dem einen der Lizenzkennzeichen zugeordnet ist, abhängt, angeben, wenn bestimmt ist, dass die Einrichtung (40) das Abhängigkeitsprogramm, von dem das mindestens eine gekaufte Programm, das dem Produktkennzeichen entspricht, das dem einen der Lizenzkennzeichen zugeordnet ist, abhängt, nicht enthält.

2. Lizenzverwaltungsvorrichtung nach Anspruch 1, wobei
die Erwerbsanweisungssendeeinheit (152; 153) die Programmerwerbsanweisung einschließlich der Kennzeichnungsinformationen, die die Erwerbsposition des mindestens einen gekauften Programms angeben, das dem Produktkennzeichen entspricht, das dem einen der Lizenzkennzeichen zugeordnet ist, zurückschickt, wenn bestimmt ist, dass die Einrichtung das Abhängigkeitsprogramm umfasst.

3. Lizenzverwaltungsvorrichtung nach Anspruch 1 oder 2, ferner umfassend:
eine Lizenznutzbarkeitsbestimmungseinheit (113), die konfiguriert ist, um über ein Netzwerk (80) einer Lizenznutzungsanfrage einschließlich eines Einrichtungskennzeichens, das für die Einrichtung einzigartig ist und auch einschließlich des einen der Lizenzkennzeichen zu empfangen, und um zu bestimmen, ob eine Nutzung einer Lizenz, die dem einen der Lizenzkennzeichen entspricht, möglich ist, basierend darauf, ob Aufzeichnungsinformationen, die angeben, dass die Lizenz, die dem einen der Lizenzkennzeichen entspricht, in der Lizenzinformationsspeichereinheit (121) gespeichert sind;
eine Lizenzinformationsaufzeichnungseinheit (115), die konfiguriert ist, um in der Lizenzinformationsspeichereinheit (121) Nutzungsinformationen zu speichern, die angeben, dass die Lizenz, die dem einen der Lizenzkennzeichen entspricht, in Verbindung mit dem einen der Lizenzkennzeichen genutzt wird, wenn bestimmt ist, dass eine Nutzung der Lizenz, die dem einen der Lizenzkennzeichen entspricht, möglich ist; und
eine Lizenzdateigenerierungseinheit (115), die konfiguriert ist, um eine Lizenzdatei (90) einschließlich des Produktkennzeichens, das dem einen der Lizenzkennzeichen zugeordnet ist und auch einschließlich des Einrichtungskennzeichens zu generieren und um die Lizenzdatei über ein Netzwerk (80) zurückzuschicken, wobei die Lizenzdatei (90) eine Nutzung des mindestens einen gekauften Programms, das dem Produktkennzeichen entspricht, das dem einen der Lizenzkennzeichen zugeordnet ist, in der Einrichtung (40), die dem Einrichtungskennzeichen entspricht, gestattet.

4. Lizenzverwaltungsvorrichtung nach Anspruch 3, wobei
die Lizenzinformationsaufzeichnungseinheit (115) in der Lizenzinformationsspeichereinheit (121) das Einrichtungskennzeichen in Verbindung mit dem einen der Lizenzkennzeichen speichert, wenn bestimmt ist, dass eine Nutzung der Lizenz, die dem einen der Lizenzkennzeichen entspricht, möglich ist.

5. Lizenzverwaltungsvorrichtung nach Anspruch 3 oder 4, ferner umfassend:
eine Lizenzfreigabeeinheit (116), die konfiguriert ist, um in der Lizenzinformationsspeichereinheit (121) Nichtnutzungsinformationen zu speichern, die angeben, dass die Lizenz, die dem einen der Lizenzkennzeichen entspricht, in Verbindung mit dem einen der Lizenzkennzeichen nicht genutzt wird, wenn eine Lizenzfreigabeanfrage einschließlich des einen der Lizenzkennzeichen und des Einrichtungskennzeichens empfangen wird.

6. Lizenzverwaltungsvorrichtung nach Anspruch 3, 4 oder 5, wobei
die Lizenzkennzeichenausgabeeinheit (112) eine Anzahl von gekauften Lizenzen, die zusammen mit dem Produktkennzeichen, das dem einen der Lizenzkennzeichen des mindestens einen gekauften Programms zugeordnet ist, empfangen wurden, in der Lizenzinformationsspeichereinheit (121) in Verbindung mit dem einen der Lizenzkennzeichen speichert;
die Lizenznutzbarkeitsbestimmungseinheit (113) bestimmt, ob eine Nutzung der Lizenz, die dem einen der Lizenzkennzeichen entspricht, möglich ist, basierend auf einer Anzahl genutzter Lizenzen unter der Anzahl gekaufter Lizenzen, die dem einen der Lizenzkennzeichen entsprechen; und
die Lizenzinformationsaufzeichnungseinheit (115) Anzahlinformationen, die die Anzahl genutzter Lizenzen, die dem einen der Lizenzkennzeichen entsprechen, angeben, in der Lizenzinformationsspeichereinheit (121) in Verbindung mit dem einen der Lizenzkennzeichen speichert.

7. Lizenzverwaltungsvorrichtung nach einem der vorangehenden Ansprüche, ferner umfassend:
eine Abhängigkeitsinformationserwerbseinheit (154), die konfiguriert ist, um Abhängigkeitszielinformationen von jedem der Programme zu erwerben, wobei jedes der Programme die Abhängigkeitszielinformationen umfasst, die das Abhängigkeitsprogramm angeben, von dem das entsprechende Programm abhängt, wobei die Abhängigkeitszielinformationen von einer Programmverwaltungseinrichtung (30) erworben werden, die die Programme umfasst und von der die Programme erworben werden; und
eine Abhängigkeitsinformationsregistrierungseinheit (156), die konfiguriert ist, um die Abhängigkeitsinformationen, die die Abhängigkeitsbeziehung zwischen den Programmen in der Abhängigkeitsinformationsspeichereinheit (156) angeben, basierend auf den erworbenen Abhängigkeitszielinformationen zu speichern.

8. Lizenzverwaltungsverfahren, das durch einen Computer ausgeführt wird, das Lizenzverwaltungsverfahren umfassend:
einen Lizenzkennzeichenausgabeschritt zum Generieren und Ausgeben eines Lizenzkennzeichens und von Lizenzinformationen, wobei das Lizenzkennzeichen einem Produktkennzeichen von mindestens einem gekauften Programm unter Programmen zugeordnet ist und das Lizenzkennzeichen mit den Lizenzinformationen für das mindestens eine gekaufte Programm in Verbindung steht;
einen Speicherschritt zum Speichern des Lizenzkennzeichens in einer Lizenzkennzeichenspeichereinheit (121);
einen Bestimmungsschritt zum Empfangen eines der Lizenzkennzeichen über ein Netzwerk (80) und Bestimmen davon, ob das eine der Lizenzkennzeichen in der Lizenzinformationsspeichereinheit (121) gespeichert ist; und
einen Sendeschritt zum Senden von Anweisungsinformationen über ein Netzwerk (80), um das mindestens eine gekaufte Programm, das dem Produktkennzeichen entspricht, das dem einen der Lizenzkennzeichen zugeordnet ist, oder eine Entität des mindestens einen gekauften Programms, das dem Produktkennzeichen entspricht, das dem einen der Lizenzkennzeichen zugeordnet ist, zu erwerben, und auch zum Senden einer Lizenzdatei (90), die konfiguriert ist, um eine Nutzung des mindestens einen gekauften Programms zu gestatten, das dem Produktkennzeichen entspricht, das dem einen der Lizenzkennzeichen zugeordnet ist, über ein Netzwerk (80), in dem Fall, dass das eine der Lizenzkennzeichen in der Lizenzinformationsspeichereinheit (121) gespeichert ist, und ferner umfassend:
einen Abhängigkeitsbeziehungsbestimmungsschritt zum Bestimmen in dem Fall, dass das eine der Lizenzkennzeichen in der Lizenzinformationsspeichereinheit (121) gespeichert ist, davon, ob eine Einrichtung (40), die ein Installationszielort des mindestens einen gekauften Programms ist, das dem Produktkennzeichen entspricht, das dem einen der Lizenzkennzeichen zugeordnet ist, ein Abhängigkeitsprogramm umfasst, von dem das mindestens eine gekaufte Programm, das dem Produktkennzeichen entspricht, das dem einen der Lizenzkennzeichen zugeordnet ist, abhängt, wobei die Bestimmung im Abhängigkeitsbeziehungsbestimmungsschritt basierend auf einem oder mehreren Produktkennzeichen, die über ein Netzwerk (80) empfangen werden und die einem oder mehreren der Programme, die in der Einrichtung (40) inbegriffen sind, entsprechen, und auch basierend auf einer Abhängigkeitsinformationsspeichereinheit (156), die Abhängigkeitsinformationen speichert, die eine Abhängigkeitsbeziehung zwischen mehreren der Programme angeben, getroffen wird; und
einen Erwerbsanweisungssendeschritt zum Zurückschicken einer Programmerwerbsanweisung einschließlich Kennzeichnungsinformationen, die eine Erwerbsposition des mindestens einen gekauften Programms, das dem Produktkennzeichen entspricht, das dem einen der Lizenzkennzeichen zugeordnet ist, und eine Erwerbsposition des Abhängigkeitsprogramms, von dem das mindestens eine gekaufte Programm, das dem Produktkennzeichen entspricht, das dem einen der Lizenzkennzeichen zugeordnet ist, abhängt, angeben, über ein Netzwerk (80), wenn bestimmt ist, dass die Einrichtung (40) das Abhängigkeitsprogramm, von dem das mindestens eine gekaufte Programm, das dem Produktkennzeichen entspricht, das dem einen der Lizenzkennzeichen zugeordnet ist, abhängt, nicht umfasst.

9. Lizenzverwaltungsverfahren nach Anspruch 8, wobei
der Erwerbsanweisungssendeschritt einen Schritt zum Zurücksenden der Programmerwerbsanweisung einschließlich der Kennzeichnungsinformationen umfasst, die die Erwerbsposition des mindestens einen gekauften Programms angeben, das dem Produktkennzeichen, das dem einen der Lizenzkennzeichen zugeordnet ist, entspricht, wenn festgelegt ist, dass die Einrichtung (40) das Abhängigkeitsprogramm enthält.

10. Lizenzverwaltungsverfahren nach Anspruch 8 oder 9, ferner umfassend:
einen Lizenznutzbarkeitsbestimmungsschritt zum Empfangen einer Lizenznutzungsanfrage einschließlich eines Einrichtungskennzeichens, das für die Einrichtung (40) einzigartig ist und auch einschließlich des einen der Lizenzkennzeichen über ein Netzwerk (80), und Bestimmen, ob eine Nutzung einer Lizenz, die dem einen der Lizenzkennzeichen entspricht, möglich ist, basierend darauf, ob Aufzeichnungsinformationen, die angeben, dass die Lizenz, die dem einen der Lizenzkennzeichen entspricht, in der Lizenzinformationsspeichereinheit (121) gespeichert ist;
einen Lizenzinformationsaufzeichnungsschritt zum Speichern von Nutzungsinformationen, die angeben, dass die Lizenz, die dem einen der Lizenzkennzeichen entspricht, genutzt wird, in Verbindung mit dem einen der Lizenzkennzeichen in der Lizenzinformationsspeichereinheit (121), wenn bestimmt ist, dass eine Nutzung der Lizenz, die dem einen der Lizenzkennzeichen entspricht, möglich ist; und
einen Lizenzdateigenerierungsschritt zum Generieren einer Lizenzdatei einschließlich des Produktkennzeichens, das dem einen der Lizenzkennzeichen zugeordnet ist und auch einschließlich des Einrichtungskennzeichens und Zurückschicken der Lizenzdatei über ein Netzwerk (80), wobei die Lizenzdatei eine Nutzung des mindestens einen gekauften Programms, das dem Produktkennzeichen entspricht, das dem einen der Lizenzkennzeichen zugeordnet ist, in der Einrichtung (40), die dem Einrichtungskennzeichen entspricht, gestattet.

11. Lizenzverwaltungsverfahren nach Anspruch 10, wobei
der Lizenzinformationsaufzeichnungsschritt einen Schritt zum Speichern des Einrichtungskennzeichens in Verbindung mit dem einen der Lizenzkennzeichen in der Lizenzinformationsspeichereinheit (121) umfasst, wenn bestimmt ist, dass eine Nutzung der Lizenz, die dem einen der Lizenzkennzeichen entspricht, möglich ist.

12. Lizenzverwaltungsverfahren nach Anspruch 10 oder 11, ferner umfassend:
einen Lizenzfreigabeschritt zum Speichern von Nichtnutzungsinformationen, die angeben, dass die Lizenz, die dem einen der Lizenzkennzeichen entspricht, nicht genutzt wird, in Verbindung mit dem einen der Lizenzkennzeichen in der Lizenzinformationsspeichereinheit (121), wenn eine Lizenzfreigabeanfrage einschließlich des einen der Lizenzkennzeichen und des Einrichtungskennzeichens empfangen wird.

## Revendications

1. Appareil de gestion de licence comprenant :
une unité de délivrance d'identifiant de licence (112) qui est configurée de manière à générer et à délivrer un identifiant de licence et une information de licence, l'identifiant de licence étant associé à un identifiant de produit d'au moins un programme acheté parmi des programmes, et l'identifiant de licence étant rapporté à l'information de licence pour l'au moins un programme acheté ;
une unité de stockage qui est configurée de manière à stocker l'identifiant de licence dans une unité de stockage d'information de licence (121) ;
une unité de détermination (113) qui est configurée de manière à recevoir l'un des identifiants de licence via un réseau, et de manière à déterminer si oui ou non l'un considéré des identifiants de licence est stocké dans l'unité de stockage d'information de licence (121) ; et
une unité d'envoi (115) qui est configurée de manière à envoyer, via un réseau, une information d'instruction de manière à acquérir l'au moins un programme acheté qui correspond à l'identifiant de produit qui est associé à l'un considéré des identifiants de licence, ou une entité de l'au moins un programme acheté qui correspond à l'identifiant de produit qui est associé à l'un considéré des identifiants de licence et de manière à envoyer également, via un réseau (80), un fichier de licence qui est configuré de manière à permettre l'utilisation de l'au moins un programme acheté qui correspond à l'identifiant de produit qui est associé à l'un considéré des identifiants de licence, dans le cas où l'un considéré des identifiants de licence est stocké dans l'unité de stockage d'information de licence (121), et comprenant en outre :
une unité de stockage d'information de dépendance (156) qui est configurée de manière à stocker une information de dépendance qui indique une relation de dépendance entre plusieurs des programmes ;
une unité de détermination de relation de dépendance (151) qui est configurée de manière à déterminer, dans le cas où l'un considéré des identifiants de licence est stocké dans l'unité de stockage d'information de licence (121), si oui ou non un dispositif (40), qui est une destination d'installation de l'au moins un programme acheté qui correspond à l'identifiant de produit qui est associé à l'un considéré des identifiants de licence, inclut un programme de dépendance dont l'au moins un programme acheté qui correspond à l'identifiant de produit qui est associé à l'un considéré des identifiants de licence dépend, dans lequel l'unité de détermination de relation de dépendance (151) effectue la détermination sur la base d'un ou de plusieurs des identifiants de produit qui sont reçus via un réseau (80) et qui correspondent à un ou à plusieurs des programmes qui sont inclus dans le dispositif (40) et également sur la base de l'unité de stockage d'information de dépendance (156) ; et
une unité d'envoi d'instruction d'acquisition (152 ; 153) qui est configurée de manière à retourner, via un réseau (80), une instruction d'acquisition de programme qui inclut une information d'identification qui indique une position d'acquisition de l'au moins un programme acheté qui correspond à l'identifiant de produit qui est associé à l'un considéré des identifiants de licence et une position d'acquisition du programme de dépendance dont l'au moins un programme acheté qui correspond à l'identifiant de produit qui est associé à l'un considéré des identifiants de licence dépend, lorsque le dispositif (40) est déterminé comme n'incluant pas le programme de dépendance dont l'au moins un programme acheté qui correspond à l'identifiant de produit qui est associé à l'un considéré des identifiants de licence dépend.

2. Appareil de gestion de licence selon la revendication 1, dans lequel :
l'unité d'envoi d'instruction d'acquisition (152 ; 153) retourne l'instruction d'acquisition de programme qui inclut l'information d'identification qui indique la position d'acquisition de l'au moins un programme acheté qui correspond à l'identifiant de produit qui est associé à l'un considéré des identifiants de licence, lorsque le dispositif est déterminé comme incluant le programme de dépendance.

3. Appareil de gestion de licence selon la revendication 1 ou 2, comprenant en outre :
une unité de détermination de capacité d'utilisation de licence (113) qui est configurée de manière à recevoir, via un réseau (80), une requête d'utilisation de licence qui inclut un identifiant de dispositif qui est unique pour le dispositif et qui inclut également l'un considéré des identifiants de licence, et de manière à déterminer si oui ou non l'utilisation d'une licence qui correspond à l'un considéré des identifiants de licence est possible sur la base de si oui ou non une information d'enregistrement indique que la licence qui correspond à l'un considéré des identifiants de licence est stockée dans l'unité de stockage d'information de licence (121) ;
une unité d'enregistrement d'information de licence (115) qui est configurée de manière à stocker, dans l'unité de stockage d'information de licence (121), une information d'utilisation qui indique que la licence qui correspond à l'un considéré des identifiants de licence est utilisée, en association avec l'un considéré des identifiants de licence, lorsque l'utilisation de la licence qui correspond à l'un considéré des identifiants de licence est déterminée comme étant possible ; et
une unité de génération de fichier de licence (115) qui est configurée de manière à générer un fichier de licence (90) qui inclut l'identifiant de produit qui est associé à l'un considéré des identifiants de licence et qui inclut également l'identifiant de dispositif, et de manière à retourner le fichier de licence via un réseau (80), dans lequel le fichier de licence (90) permet l'utilisation de l'au moins un programme acheté qui correspond à l'identifiant de produit qui est associé à l'un considéré des identifiants de licence, dans le dispositif (40) qui correspond à l'identifiant de dispositif.

4. Appareil de gestion de licence selon la revendication 3, dans lequel :
l'unité d'enregistrement d'information de licence (115) stocke, dans l'unité de stockage d'information de licence (121), l'identifiant de dispositif en association avec l'un considéré des identifiants de licence, lorsque l'utilisation de la licence qui correspond à l'un considéré des identifiants de licence est déterminée comme étant possible.

5. Appareil de gestion de licence selon la revendication 3 ou 4, comprenant en outre :
une unité de libération de licence (116) qui est configurée de manière à stocker, dans l'unité de stockage d'information de licence (121), une information de non utilisation qui indique que la licence qui correspond à l'un considéré des identifiants de licence n'est pas utilisée, en association avec l'un considéré des identifiants de licence, lorsqu'une requête de libération de licence qui inclut l'un considéré des identifiants de licence et l'identifiant de dispositif est reçue.

6. Appareil de gestion de licence selon la revendication 3, 4 ou 5, dans lequel :
l'unité de délivrance d'identifiant de licence (112) stocke un nombre de licences achetées qui sont reçues en association avec l'identifiant de produit qui est associé à l'un considéré des identifiants de licence de l'au moins un programme acheté, dans l'unité de stockage d'information de licence (121) en association avec l'un considéré des identifiants de licence ;
l'unité de détermination de capacité d'utilisation de licence (113) détermine si oui ou non l'utilisation de la licence qui correspond à l'un considéré des identifiants de licence est possible sur la base d'un nombre de licences utilisées parmi le nombre de licences achetées qui correspondent à l'un considéré des identifiants de licence ; et
l'unité d'enregistrement d'information de licence (115) stocke une information de nombre qui indique le nombre de licences utilisées qui correspondent à l'un considéré des identifiants de licence dans l'unité de stockage d'information de licence (121) en association avec l'un considéré des identifiants de licence.

7. Appareil de gestion de licence selon l'une quelconque des revendications précédentes, comprenant en outre :
une unité d'acquisition d'information de dépendance (154) qui est configurée de manière à acquérir une information de destination de dépendance de chacun des programmes, dans lequel chacun des programmes inclut l'information de destination de dépendance qui indique le programme de dépendance dont le programme correspondant dépend, dans lequel l'information de destination de dépendance est acquise à partir d'un dispositif de gestion de programme (30), lequel dispositif inclut les programmes et lequel dispositif est l'endroit depuis lequel les programmes sont acquis ; et
une unité d'enregistrement d'information de dépendance (156) qui est configurée de manière à stocker l'information de dépendance qui indique la relation de dépendance entre les programmes dans l'unité de stockage d'information de dépendance (156) sur la base de l'information de destination de dépendance acquise.

8. Procédé de gestion de licence exécuté par un ordinateur, le procédé de gestion de licence comprenant :
une étape de délivrance d'identifiant de licence qui consiste à générer et à délivrer un identifiant de licence et une information de licence, l'identifiant de licence étant associé à un identifiant de produit d'au moins un programme acheté parmi des programmes, et l'identifiant de licence étant rapporté à l'information de licence pour l'au moins un programme acheté ;
une étape de stockage qui consiste à stocker l'identifiant de licence dans une unité de stockage d'information de licence (121) ;
une étape de détermination qui consiste à recevoir l'un des identifiants de licence via un réseau (80), et à déterminer si oui ou non l'un considéré des identifiants de licence est stocké dans l'unité de stockage d'information de licence (121) ; et
une étape d'envoi qui consiste à envoyer, via un réseau (80), une information d'instruction de manière à acquérir l'au moins un programme acheté qui correspond à l'identifiant de produit qui est associé à l'un considéré des identifiants de licence, ou une entité de l'au moins un programme acheté qui correspond à l'identifiant de produit qui est associé à l'un considéré des identifiants de licence, et qui consiste à envoyer également, via un réseau (80), un fichier de licence (90) qui est configuré de manière à permettre l'utilisation de l'au moins un programme acheté qui correspond à l'identifiant de produit qui est associé à l'un considéré des identifiants de licence, dans le cas où l'un considéré des identifiants de licence est stocké dans l'unité de stockage d'information de licence (121), et comprenant en outre :
une étape de détermination de relation de dépendance qui consiste à déterminer, dans le cas où l'un considéré des identifiants de licence est stocké dans l'unité de stockage d'information de licence (121), si oui ou non un dispositif (40), qui est une destination d'installation de l'au moins un programme acheté qui correspond à l'identifiant de produit qui est associé à l'un considéré des identifiants de licence, inclut un programme de dépendance dont l'au moins un programme acheté qui correspond à l'identifiant de produit qui est associé à l'un considéré des identifiants de licence dépend, dans lequel la détermination au niveau de l'étape de détermination de relation de dépendance est effectuée sur la base d'un ou de plusieurs des identifiants de produit qui sont reçus via un réseau (80) et qui correspondent à un ou à plusieurs des programmes qui sont inclus dans le dispositif (40) et également sur la base d'une unité de stockage d'information de dépendance (156) qui stocke une information de dépendance qui indique une relation de dépendance entre plusieurs des programmes ; et
une étape d'envoi d'instruction d'acquisition qui consiste à retourner, via un réseau (80), une instruction d'acquisition de programme qui inclut une information d'identification qui indique une position d'acquisition de l'au moins un programme acheté qui correspond à l'identifiant de produit qui est associé à l'un considéré des identifiants de licence et une position d'acquisition du programme de dépendance dont l'au moins un programme acheté qui correspond à l'identifiant de produit qui est associé à l'un considéré des identifiants de licence dépend, lorsque le dispositif (40) est déterminé comme n'incluant pas le programme de dépendance dont l'au moins un programme acheté qui correspond à l'identifiant de produit qui est associé à l'un considéré des identifiants de licence dépend.

9. Procédé de gestion de licence selon la revendication 8, dans lequel :
l'étape d'envoi d'instruction d'acquisition inclut une étape consistant à retourner l'instruction d'acquisition de programme qui inclut l'information d'identification qui indique la position d'acquisition de l'au moins un programme acheté qui correspond à l'identifiant de produit qui est associé à l'un considéré des identifiants de licence, lorsque le dispositif (40) est déterminé comme incluant le programme de dépendance.

10. Procédé de gestion de licence selon la revendication 8 ou 9, comprenant en outre :
une étape de détermination de capacité d'utilisation de licence qui consiste à recevoir, via un réseau (80), une requête d'utilisation de licence qui inclut un identifiant de dispositif qui est unique pour le dispositif (40) et qui inclut également l'un considéré des identifiants de licence, et qui consiste à déterminer si oui ou non l'utilisation d'une licence qui correspond à l'un considéré des identifiants de licence est possible sur la base de si oui ou non une information d'enregistrement indique que la licence qui correspond à l'un considéré des identifiants de licence est stockée dans l'unité de stockage d'information de licence (121) ;
une étape d'enregistrement d'information de licence qui est configurée de manière à stocker, dans l'unité de stockage d'information de licence (121), une information d'utilisation qui indique que la licence qui correspond à l'un considéré des identifiants de licence est utilisée, en association avec l'un considéré des identifiants de licence, lorsque l'utilisation de la licence qui correspond à l'un considéré des identifiants de licence est déterminée comme étant possible ; et
une étape de génération de fichier de licence qui consiste à générer un fichier de licence qui inclut l'identifiant de produit qui est associé à l'un considéré des identifiants de licence et qui inclut également l'identifiant de dispositif, et qui consiste à retourner le fichier de licence via un réseau (80), dans lequel le fichier de licence permet l'utilisation de l'au moins un programme acheté qui correspond à l'identifiant de produit qui est associé à l'un considéré des identifiants de licence, dans le dispositif (40) qui correspond à l'identifiant de dispositif.

11. Procédé de gestion de licence selon la revendication 10, dans lequel :
l'étape d'enregistrement d'information de licence inclut une étape qui consiste à stocker, dans l'unité de stockage d'information de licence (121), l'identifiant de dispositif en association avec l'un considéré des identifiants de licence, lorsque l'utilisation de la licence qui correspond à l'un considéré des identifiants de licence est déterminée comme étant possible.

12. Procédé de gestion de licence selon les revendications 10 ou 11, comprenant en outre :
une étape de libération de licence qui consiste à stocker, dans l'unité de stockage d'information de licence (121), une information de non utilisation qui indique que la licence qui correspond à l'un considéré des identifiants de licence n'est pas utilisée, en association avec l'un considéré des identifiants de licence, lorsqu'une requête de libération de licence qui inclut l'un considéré des identifiants de licence et l'identifiant de dispositif est reçue.
